# EUROPEAN PATENT APPLICATION

(11) **EP 4 838 862 A1**
(43) Date of publication of application: **11.11.2026**
(21) Application number: 24915252.1
(22) Date of filing: 31.12.2024
(51) Int. Cl.: H04L 47/76

(54) **TIME SLOT ADJUSTMENT METHOD**

(30) Priority: 02.01.2024 CN 202410011738
(71) Applicant: ZTE Corporation, Shenzhen, Guangdong 518057 (CN)
(72) Inventor: LIU, Feng, Shenzhen, Guangdong 518057 (CN)
(74) Representative: Savi, Massimiliano
(86) International application number: PCT/CN2024/144308
(87) International publication number: WO 2025/146038

(57) **Abstract**

Provided in the present application is a time slot adjustment method. The method comprises: after a time slot adjustment policy is determined by means of negotiation with a downstream node and a sink node, using the time slot adjustment policy at a time slot adjustment moment to complete time slot adjustment; and by means of the downstream node, sending a plurality of pieces of time slot adjustment indication information to the sink node, such that the downstream node and the sink node determine the time slot adjustment moment on the basis of the plurality of pieces of time slot adjustment indication information, and use the time slot adjustment policy at the time slot adjustment moment to complete time slot adjustment.

## Description

### CROSS-REFERENCE TO RELATED APPLICATION

This application is filed on the basis of the Chinese patent application No. 202410011738.1 filed January 2, 2024, and claims priority of the Chinese patent application, the entire contents of which are incorporated herein by reference.

### TECHNICAL FIELD

The present application relates to, without limitation, the field of communication technology, and in particular, relate to a method for timeslot adjustment.

### BACKGROUND

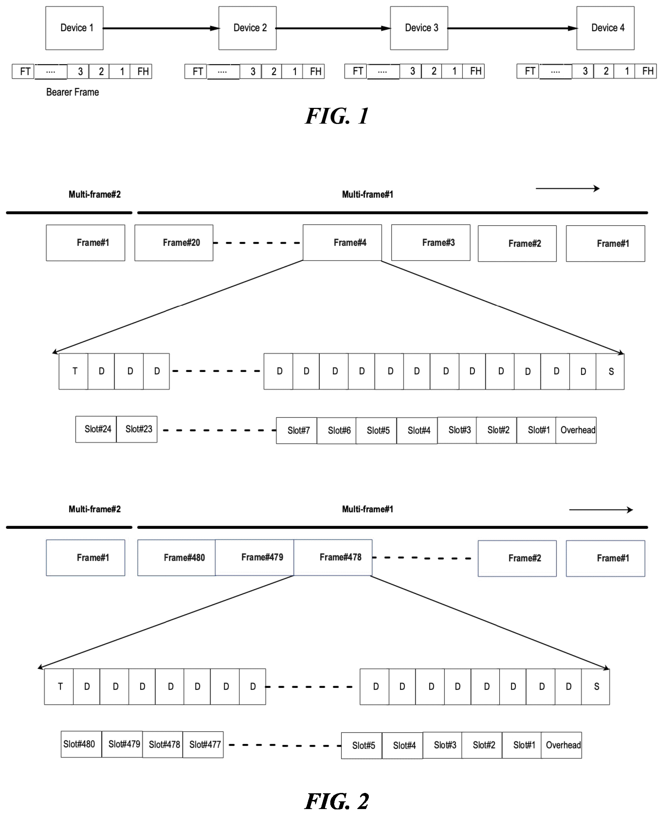

Currently, in a communication network, a timeslot is generally employed to transport a client stream. A plurality of timeslots are multiplexed within a bearer frame of a physical channel, or multiplexed across a plurality of bearer frames. The client stream can be transported via each timeslot. The plurality of timeslots are strictly physically isolated from each other without mutual interference. As illustrated in FIG. 1, a bearer frame contains a plurality of timeslots in a time-division multiplexing (TDM) structure. Client streams are transported via timeslot 1 and timeslot 2, whereas no client stream is transported via other timeslots. In application, each client stream can be transported and transmitted via a portion of the timeslots, such that a transmission rate of the client stream can be flexibly adjusted. When a bandwidth requirement of the client stream is high, the client stream is selected to be transported via a plurality of timeslots; when the bandwidth requirement of the client stream is low, the client stream is transported via a reduced number of timeslots. The bandwidth of the client stream corresponds to a quantity of the timeslots allocated for transport, to satisfy client streams of various bandwidth requirements. In practical applications, a bandwidth requirement of a client stream is variable; when a client is initially in a start-up stage, the bandwidth requirement of the client stream is relatively low, and a service plan with a small number of timeslots is purchased to transport the client stream. Over time, the client may experience market expansion and growth, a larger service bandwidth requirement may be introduced, and a service plan with more timeslots is required to be purchased to transport the client stream. For a service with a declining market, the client service bandwidth may decrease after a period of time, and a quantity of timeslots allocated for transport is required to be reduced, such that the quantity of timeslots of the client service needs to be adjusted dynamically and non-disruptively to satisfy a demand for variation in the client service bandwidth.

Compared with a conventional hop-by-hop negotiation and hop-by-hop adjustment mechanism, after an end-to-end timeslot adjustment negotiation succeeds, an operation of adjusting timeslots is initiated by transporting an indication signal for the timeslot adjustment via a client service, such that negotiation time is reduced, serious consequences encountered when adjustment negotiation is unsuccessful during a hop-by-hop adjustment are circumvented, a rollback requirement when adjustment is unsuccessful is circumvented, adjustment negotiation time is saved, and an adjustment success probability is improved. However, when a service bandwidth variation moment is not aligned with a timeslot quantity variation moment, since a transmission rate difference exists between the service bandwidth variation moment and the timeslot quantity variation moment, a buffer is required to temporarily store the client service to adapt to the transmission rate difference. The longer an inconsistent duration between the service bandwidth variation moment and the timeslot quantity variation moment is, the larger a service volume required to be buffered is, and the higher a hardware cost is.

### SUMMARY

Provided is a method for timeslot adjustment, whereby an asynchronous duration between a service bandwidth variation moment and a timeslot quantity variation moment can be reduced, such that a buffered service quantity can be effectively reduced, and a cost and client latency are lowered down.

According to an embodiment of the present application, a method for timeslot adjustment is provided. The method may include: in response to a negotiation with a downstream node and a sink node to determine a timeslot adjustment strategy, performing a timeslot adjustment at a timeslot adjustment moment by employing the timeslot adjustment strategy; and transmitting a plurality of timeslot adjustment indications to the sink node through the downstream node, to allow the downstream node and the sink node to determine the timeslot adjustment moment based on the plurality of timeslot adjustment indications, and perform the timeslot adjustment at the timeslot adjustment moment by employing the timeslot adjustment strategy.

According to a second aspect of the present application, a method for timeslot adjustment is provided. The method may include: in response to receiving a plurality of timeslot adjustment indications transmitted by the upstream node after determining a timeslot adjustment strategy through negotiation with an upstream node and a downstream node, determining a timeslot adjustment moment based on the plurality of timeslot adjustment indications, and performing timeslot adjustment at the timeslot adjustment moment by employing the timeslot adjustment strategy; and transmitting the plurality of timeslot adjustment indications to a downstream node, to allow the downstream node to determine the timeslot adjustment moment based on the plurality of timeslot adjustment indications, and to perform the timeslot adjustment at the timeslot adjustment moment by employing the timeslot adjustment strategy.

According to another embodiment of the present application, a method for timeslot adjustment is provided. The method includes: in response to receiving a plurality of timeslot adjustment indications transmitted by an upstream node after determining a timeslot adjustment strategy through negotiation with the upstream node, determining a timeslot adjustment moment based on to the plurality of timeslot adjustment indications; and performing a timeslot adjustment at the timeslot adjustment moment by employing the timeslot adjustment strategy.

According to yet another embodiment of the present application, a communication apparatus is provided. The apparatus includes a memory, a processor, and a computer program stored in the memory and executable on the processor which, when executed by the processor, causes the processor to carry out any one of the methods as described above.

According to yet another embodiment of the present application, a computer-readable storage medium is provided. The computer-readable storage medium stores a computer-executable instruction which, when executed by a processor causes the processor to carry out any one of the methods as described above.

According to the embodiments of the present application, after the timeslot adjustment strategy is determined through negotiation with the downstream node and the sink node, the timeslot adjustment may be accomplished by the head node at the timeslot adjustment moment by employing the timeslot adjustment strategy, and a plurality of timeslot adjustment indications are transmitted to the sink node through the downstream node, to allow the downstream node and the sink node to determine the timeslot adjustment moment based on the plurality of timeslot adjustment indications, and accomplish the timeslot adjustment at the timeslot adjustment moment by employing a corresponding timeslot adjustment strategy. Therefore, an asynchronous duration between the client stream bandwidth variation moment and the timeslot quantity variation moment may be reduced, such that a buffered client stream quantity may be reduced, and cost and client service latency are lowered down.

### BRIEF DESCRIPTION OF DRAWINGS

FIG. 1 is a schematic diagram illustrating a bearer frame with a plurality of timeslots in the related art;
FIG. 2 is a schematic diagram illustrating a frame structure formulated by China Mobile in the related art;
FIG. 3 is a schematic diagram illustrating an adjustment process for reducing a timeslot in the related art;
FIG. 4 is a schematic diagram illustrating an adjustment process for increasing a timeslot in the related art;
FIG. 5 is a schematic diagram illustrating a timeslot adjustment process in the related art;
FIG. 6 is a schematic diagram illustrating a timeslot negotiation in the related art;
FIG. 7 is a flowchart illustrating a method for timeslot adjustment according to an embodiment of the present application;
FIG. 8 is a schematic diagram illustrating an insertion of timeslot adjustment information into a client flow according to an embodiment of the present application;
FIG. 9 is a schematic diagram illustrating a structure of an o code block according to an embodiment of the presentapplication;
FIG. 10 is a schematic diagram illustrating a timeslot adjustment indication code block provided at an intermediate moment in a bearer frame according to an embodiment of the present application;
FIG. 11 is a schematic diagram illustrating a structure in which a subsequent valid timeslot position is configured as a reference moment, and a switchover to a newly adjusted timeslot is performed at the subsequent valid timeslot position, according to an embodiment of the present application;
FIG. 12 is a schematic diagram illustrating the determination of a reference moment point according to an embodiment of the present application;
FIG. 13 is a schematic diagram illustrating the determination of another reference moment point according to in an embodiment of the present application;
FIG. 14 is a schematic diagram illustrating the specially defined code blocks spaced by a fixed quantity of client code blocks, according to an embodiment of the present application;
FIG. 15 is a schematic diagram illustrating a scenario in which an interval between a timeslot switchover moment code block and a timeslot adjustment indication code block is a T2 value according to an embodiment of the present application;
FIG. 16 is a schematic diagram illustrating an expected insertion position of a timeslot adjustment indication code block disposed at an intermediate position of a packet, according to an embodiment of the present application;
FIG. 17 is a schematic diagram illustrating OAM code blocks are transmitted at equal intervals according to a period T and in a fixed sequence pattern according to an embodiment of the present application;
FIG. 18 is a schematic diagram illustrating an extended function of an OAM code block according to an embodiment of the present application;
FIG. 19 is a schematic diagram illustrating a structure of a novel OAM sequence according to an embodiment of the present application;
FIG. 20 is a schematic diagram illustrating an OAM sequence for transmitting a pseudo-L code block according to an embodiment of the present application;
FIG. 21 is a schematic diagram illustrating an extended APS code block sequence carrying timeslot adjustment indication according to an embodiment of the present application;
FIG. 22 is a schematic diagram illustrating an insertion of one timeslot adjustment indication code block into an APS code block sequence according to an embodiment of the present application;
FIG. 23 is a schematic diagram illustrating a transmission of a specially defined pseudo-L code block at an L code block position in 32nd to 64th minor cycle of an OAM sequence according to an embodiment of the present application;
FIG. 24 is a schematic diagram illustrating timeslot adjustment indication carrying a verification function on B1 and B2 code blocks according to an embodiment of the present application;
FIG. 25 is a flowchart illustrating a selection of timeslot between devices for adjustment according to an embodiment of the present application;
FIG. 26 is a schematic diagram illustrating the withdrawal of a timeslot adjustment request according to an embodiment of the present application;
FIG. 27 is a flowchart illustrating the determination of a timeslot adjustment strategy through negotiation by a head node according to an embodiment of the present application;
FIG. 28 is a flowchart illustrating a method for timeslot adjustment according to another embodiment of the present application;
FIG. 29 is a flowchart illustrating a method for determining a timeslot adjustment strategy through negotiation by an intermediate node according to an embodiment of the present application;
FIG. 30 is a flowchart illustrating a method for timeslot adjustment according to another embodiment of the present application; and
FIG. 31 is a flowchart illustrating the determination of a timeslot adjustment strategy through negotiation by a sink node according to an embodiment of the present application.

### DETAILED DESCRIPTION

The purpose, technical scheme and advantages of the present application will become apparent through the following description for various embodiments in conjunction with the drawings. It should be understood that the embodiments described here are intended for illustration but not limitation of the present application.

It shall be noted that, in some cases, the operations shown or described may be performed in a different order than the logical order shown in the flowcharts. It should be understood that in the description, the claims and the description of the drawings, the term a plurality (or plurality) means two or more; greater than, less than, more than, etc. shall be understood to exclude the number being referred to; and above, below, within, etc. shall be understood to include the number being referred to. Term "first" and "second" if described, are intended for distinguishing technical features, which shall not be understood as indicating or implying relative importance or implicitly indicating the number of the indicated technical features or the order of the indicated technical features.

It should be noted that a frame structure is generally employed in a communication network to carry a client service, and a bearer frame is divided into timeslots. Generally, an equipment is a bearer equipment that supports transporting the client service with timeslots, including, without limitation, an equipment supporting an international standard MTN protocol and an SPN equipment defined by the China Mobile corporation standard. A bearer frame includes a frame header, a container, and a frame trailer. The timeslots can be allocated within the container. Positions of the timeslots are fixed, and the positions are transported within the network along with the bearer frame. Each client service can be selected to be transmitted at a fixed timeslot, and different clients can select different timeslot positions for bearing. When the client bandwidth is large, multiple timeslots may be selected to carry the load, and when the client bandwidth is small, fewer timeslots may be selected to carry the load. When the client service is transported, the client service can be first mapped, on a source-end equipment, into a corresponding timeslot of the bearer frame and transmitted, the bearer frame is then forwarded by an intermediate equipment, and finally, the client service is extracted from the corresponding timeslot within the bearer frame at a sink-end equipment, such that an original client service is recovered.

The bearer frame generally has a fixed frame structure, which is similar to an encoding result of an Ethernet message. A 64B/66B encoding operation can be performed when an Ethernet service is transported. In a 64B/66B encoding rule defined in the IEEE 802.3 protocol, each code block consists of 66 bits, and the first 2 bits are a synchronization header of the code block. The synchronization header bits being "01" specifies a D code block (data code block), and a subsequent 8-byte (64 bits) position corresponds to an 8-byte data content. The synchronization header bits being "10" specifies a control code block, and a content of a first byte immediately following the synchronization header bits specifies a type of the control code block. A subsequent 7 bytes correspond to a content of the control code block, and the 7-byte content is determined based on the type of the control code block. An S code block, a T code block, an O code block, an Idle code block, or a combination thereof belongs to the control code block. An S code block, a T code block, an O code block, an Idle code block, or a combination thereof belongs to the control code block. The content of a first byte within the S code block is '0x78', specifying that the control code block is the S code block, and the S code block specifies a start code block within a data message code block stream. The T code block specifies a terminate code block within the data message code block stream, and the T code block corresponds to an end block of a data message. In addition to specifying the terminate code block, the T code block can also transport a client byte content, and the client byte content is located at a position of the last 7 bytes within the T code block. In an Ethernet standard, the T code block is classified into 8 types: T0, T1, T2, T3, T4, T5, T6, and T7. No client information is transported via a T0 code block, where a content of a first byte within the T0 code block is '0x87'. One byte of client information is transported via a T1 code block, where a content of a first byte within the T1 code block is '0x99'. Two bytes of client information are transported via a T2 code block, where a content of a first byte within the T2 code block is '0xAA'. By extension, 7 bytes of client information are transported via a T7 code block, where a content of a first byte within the T7 code block is '0xFF'. The Idle code block (I code block for short) specifies an idle code block or an error indication code block, and a control word content within the Idle code block is '0x1E'. The O code block specifies a maintenance and management code block, and a control word content within the O code block is '0x4B'.

At present, different China domestic and international standards formulate different bearer frame formats. For example, FIG. 2 is a schematic diagram illustrating a frame structure formulated by China Mobile. As illustrated in FIG. 2, the bearer frame consists of 1 (one) S code block, 195 D code blocks, and 1 (one) T code block. Overhead byte information and 24 timeslots are allocated within a D code block in a frame. Every 20 frames constitute a multi-frame, and 480 timeslots are provided in one multi-frame period. The lower portion of FIG. 2 is a schematic diagram illustrating a frame structure in a standard under development by the International Telecommunication Union (ITU). The bearer frame includes one S code block, 990 D code blocks, and one T code block. Overhead byte information and 480 timeslots are allocated within the D code blocks in the bearer frame. Meanwhile, 480 frames constitute a multi-frame. Relevant overhead information corresponding to one timeslot is transmitted by each frame within the multi-frame. Relevant overhead information corresponding to the 480 timeslots is transmitted through the 480 frames within one multi-frame. Regardless of the standard, overhead bytes in the bearer frame generally includes the following information:
MFI: Multi-frame indicator;
GCC: General Communication Channel;
Slot num: Slot number;
client num: client number;
CR: Configuration Request;
CA: Configuration Acknowledge;
C: Configuration come into force;
S: Send notice.

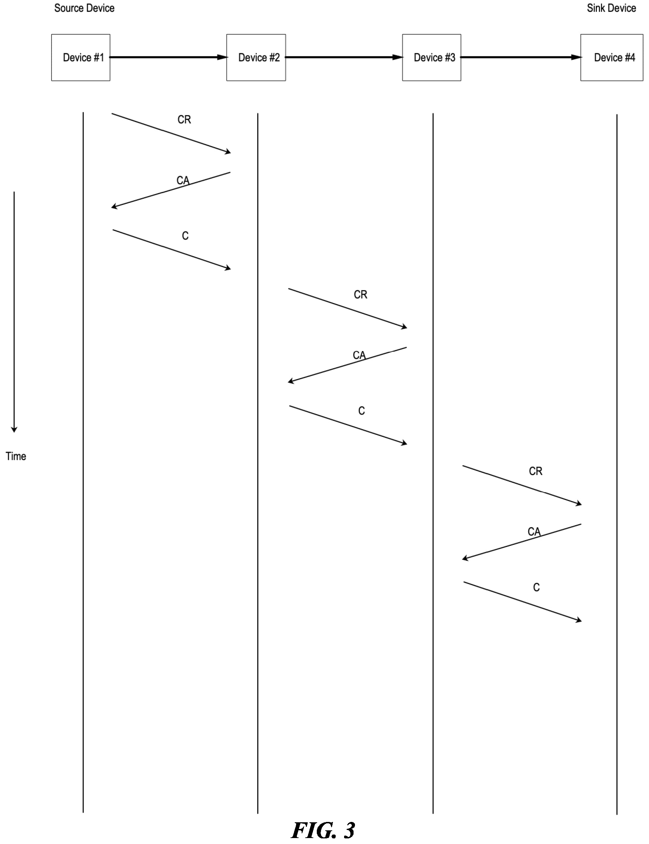

In a practical service application, a client service is initially small, a purchased network bandwidth is small, and only a small quantity of transport timeslots are required. After a period of time, as the client service increases, more timeslots are required to transport the client service, and an operation of increasing the timeslots needs to be accomplished, such that a timeslot quantity is increased non-disruptively without affecting or interrupting the client service. For an enterprise service with a declining market, the client service decreases after a period of time, and a quantity of transport timeslots is required to be reduced, in which case the quantity of the timeslots transporting the client service needs to be reduced dynamically without affecting the client service. A conventional scheme employs a hop-by-hop negotiation and hop-by-hop adjustment mechanism. During an adjustment process, a handshake and negotiation process for timeslot adjustment is first initiated: a device at one end transmits a timeslot adjustment request signal, and after receiving the timeslot adjustment request signal, a device at another end sends back a timeslot adjustment acknowledgment signal. The device transmitting the timeslot adjustment request signal accomplishes a negotiation operation between the device at one end and the device at the other end upon receiving the timeslot adjustment acknowledgment signal, such that a timeslot quantity adjustment can be initiated. FIG. 3 is a schematic diagram illustrating an adjustment process for reducing a timeslot demand according to an embodiment of the present application. When timeslots are required to be reduced, a source-end device (device 1) transmits a timeslot adjustment reduction request signal CR (Configuration Request) to a downstream device 2. Timeslot numbers for the reduction adjustment are transmitted when the CR signal is transmitted, specifying the timeslot numbers required to be adjusted for reduction to the downstream device 2. After the device 2 receives the CR signal, a timeslot adjustment acknowledgment signal CA (Configuration Acknowledge) is transmitted to the device 1 after a preparation operation is accomplished. After the device 1 receives a timeslot adjustment acknowledgment signal CA from the device 2, a negotiation operation for the timeslot reduction adjustment between the device 1 and the device 2 is accomplished. The device 1 transmits an adjustment indication signal C (Configuration Come Into Force), and the device 1 and the device 2 then transport the client service at timeslot positions after the reduction adjustment. When the device 2 receives an adjustment indication signal C from the device 1, a timeslot reduction adjustment request signal CR is transmitted from the device 2 to a downstream device 3. Timeslot numbers for the reduction adjustment are transmitted along with the CR signal. After the device 3 receives the CR signal, a timeslot adjustment acknowledgment signal CA is sent back to the device 2 after a preparation operation is accomplished. After the device 2 receives the timeslot adjustment acknowledgment signal CA from the device 3, a negotiation operation for the timeslot reduction adjustment between the device 2 and the device 3 is accomplished. After the device 2 receives a timeslot adjustment acknowledgment signal CA from the device 3, an adjustment indication signal C is transmitted, and the device 2 and the device 3 then transport the client service at timeslot positions with the timeslot reduction. The above process continues, until the device 3 and a device 4 accomplish a negotiation operation for timeslot reduction adjustment, such that the entire timeslot adjustment operation is accomplished. The above adjustment process is a link-by-link negotiation and a link-by-link adjustment implementation. During the adjustment process, some devices have accomplished the adjustment and transport services based on an adjusted timeslot quantity, whereas some other devices have not accomplished the adjustment and transport services based on a pre-adjustment timeslot quantity. During a reduction adjustment process, a timeslot quantity between adjacent upstream devices is reduced first. After a timeslot quantity of adjacent upstream nodes is reduced, a timeslot reduction operation for a downstream device is initiated. A timeslot quantity between upstream nodes is consistently maintained to be less than a timeslot quantity between downstream nodes. That is, a service bandwidth between the upstream nodes is smaller than a service bandwidth between the downstream nodes, preventing an upstream service bandwidth in a transmission pipeline from being greater than a downstream service bandwidth, which causes service overflow at some node positions because the upstream bandwidth is greater than the downstream bandwidth. Therefore, in the adjustment process, the end-to-end bandwidth reduction adjustment of the service is completed only after the devices of the last two nodes complete the timeslot reduction adjustment.

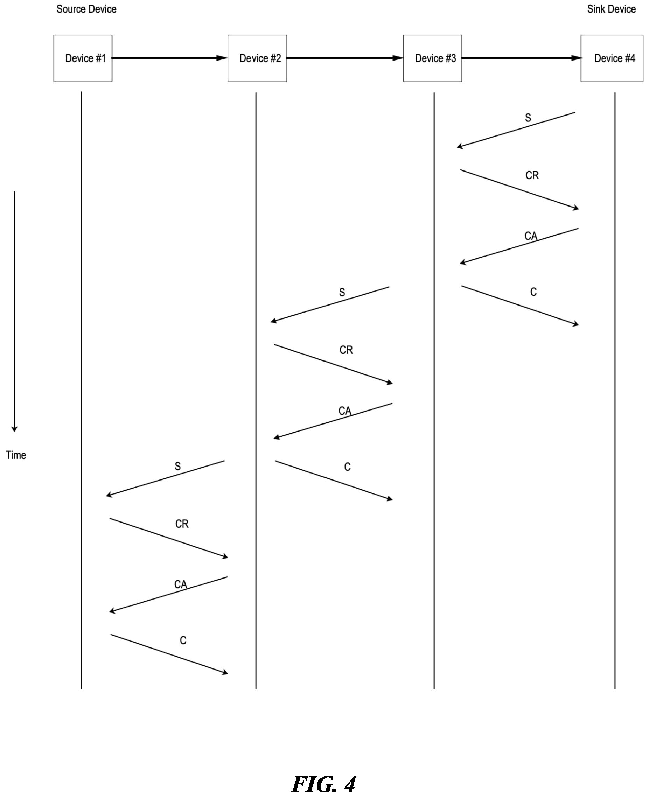

When increasing timeslots, in order to ensure that a service bandwidth between upstream nodes is smaller than a service bandwidth between downstream nodes, an enterprise standard of China Mobile stipulates that when a timeslot increase adjustment is performed, the timeslot increase adjustment is initiated from a sink-end device. FIG. 4 is a schematic diagram illustrating an adjustment process for increasing a timeslot demand according to an embodiment of the present application. When timeslots need to be increased, a sink-end device (device 4) transmits a bandwidth increase adjustment notification information S (send notice) signal to an upstream device 3. After the upstream device 3 receives the S signal, the upstream device 3 initiates an increase adjustment, transmits a CR signal to the device 4 along with the timeslot serial numbers for the increase adjustment. After the device 4 receives the CR signal, a timeslot increase adjustment acknowledgment signal CA is sent back to the upstream device 3 after a preparation operation is accomplished. After the device 3 receives a timeslot increase adjustment acknowledgment signal CA from the device 4, a negotiation operation for the timeslot increase adjustment between the device 3 and the device 4 is accomplished. The device 3 transmits an adjustment indication signal C to the device 4, and the device 3 and the device 4 then transport a client service based on the increased timeslots. Meanwhile, the device 3 transmits a timeslot increase adjustment notification information S signal to an upstream device 2. After the upstream device 2 receives the S signal, the upstream device 2 initiates a negotiation operation for timeslot increase adjustment, transmits a CR signal to the device 3, along with timeslot serial numbers for the increase adjustment. After the device 3 receives the CR signal, a timeslot increase adjustment acknowledgment signal CA is sent back to the upstream device 2 after a preparation operation is accomplished. After the device 2 receives a timeslot increase adjustment acknowledgment signal CA from the device 3, a negotiation operation for the timeslot increase adjustment between the device 2 and the device 3 is accomplished. The device 2 transmits an adjustment indication signal C to the device 3, and the device 2 and the device 3 then transport a client service based on the increased timeslots. Meanwhile, the device 2 transmits a timeslot increase adjustment notification information S signal to an upstream device 1. Likewise, the device 1 and the device 2 accomplish a negotiation operation for timeslot increase adjustment, such that an entire timeslot increase adjustment operation is accomplished. The adjustment process is completed by negotiation and execution successively, link by link. In the adjustment process of increasing timeslots, a timeslot quantity is always increased between downstream devices first, and then between upstream devices, and a timeslot quantity between upstream devices is always maintained to be less than a timeslot quantity between downstream nodes. That is, a service bandwidth between upstream devices is smaller than a service bandwidth between downstream nodes, so as to avoid service overflow caused by a fact that an upstream service bandwidth is greater than a downstream service bandwidth in a transmission pipeline. In the timeslot increase adjustment process, the end-to-end bandwidth increase adjustment of the service is completed only after the devices of the last two nodes complete the timeslot increase adjustment.

A conventional bandwidth adjustment process is a link-by-link negotiation and a link-by-link adjustment implementation. Only when an adjustment of one link is accomplished, an adjustment operation of a next link is initiated, in which case the conventional bandwidth adjustment process consumes a large amount of time. At the same time, the link-by-link negotiation and the link-by-link adjustment implementation bring a significant drawback, that is, some links have been adjusted, whereas some other links encounter unexpected situations during the adjustment process (for example, CR and/or CA signal loss is caused by interference during adjustment between some nodes, or a certain device encounters a operational failure and fails to send back an acknowledgment CA signal, resulting in a negotiation failure between upstream and downstream devices). When a timeslot adjustment negotiation between some devices fails, a subsequent timeslot adjustment operation is interrupt. In this case, some devices on a network that are successfully adjusted operate based on a new/adjusted timeslot quantity, while some other devices operate based on an old/unadjusted timeslot quantity, resulting in inconsistent end-to-end bearing bandwidths for services. Under a circumstance where negotiation between some devices fails and timeslot adjustment for subsequent devices is interrupt, a rollback mechanism generally needs to be initiated, in which case the devices with adjusted timeslots are rolled back to operate with original unadjusted timeslots based on a reverse adjustment operation. For example, if timeslot adjustments for some devices are successful with some other devices fail during a timeslot increase adjustment, a timeslot reduction adjustment operation is initiated for the devices with successful adjustment, and increased timeslots are removed based on a timeslot reduction mechanism, thereby accomplishing a timeslot rollback operation. Similarly, timeslot adjustments for some devices are successful with some other devices fail during a timeslot reduction adjustment, a timeslot increase adjustment operation is initiated for the devices with successful adjustment, and reduced timeslots are added back again based on a timeslot increase mechanism, thereby accomplishing a timeslot rollback operation. A timeslot rollback process is also highly cumbersome. For example, a rollback adjustment failure may be encountered during a rollback operation, such that the rollback operation is interrupted, resulting in a technical dead-end where both an end-to-end timeslot adjustment and an end-to-end timeslot rollback operation fail. In networking among different manufacturers, an adjustment failure easily occurs during timeslot adjustment negotiation due to different internal processing mechanisms of the different manufacturers, thereby causing difficulties in applying a conventional timeslot adjustment.

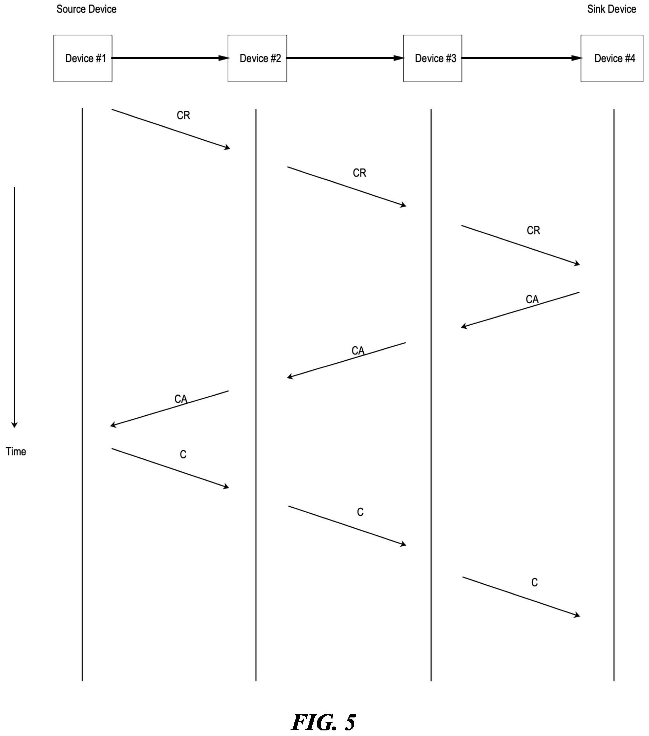

In order to solve problems of a slow adjustment speed and poor adjustment reliability occurring in a conventional timeslot adjustment scheme, an end-to-end timeslot negotiation and adjustment scheme is provided. FIG. 5 is a schematic diagram illustrating a timeslot adjustment process accordign to an embodiment of the present application. The timeslot adjustment process includes: a network management system issues a timeslot configuration content and an adjustment command to a source-end device, and the source-end device and a sink-end device are determined. Regardless of an increase adjustment of timeslots or a reduction adjustment of timeslots, a timeslot adjustment is always initiated by a source-end device. A source-end device 1 transmits an adjustment bandwidth request signal CR to a downstream device 2. Timeslot serial numbers for adjustment, indicating timeslot numbers required to be adjusted are transmitted along with the CR signal to the downstream device 2. After an intermediate device 2 receives the CR signal and initiates a preparation operation, an acknowledgment signal CA is not immediately sent back to the source-end device 1. Instead, the intermediate device 2 proceeds with transmitting a timeslot adjustment request signal CR to a downstream device 3 along with timeslot serial numbers for adjustment. Similarly, after an intermediate device 3 receives the CR signal and initiates a preparation operation, an acknowledgment signal CA is not immediately sent back to the intermediate device 2; instead, a timeslot adjustment request signal CR is transmitted to a downstream device 4, along with timeslot serial numbers for adjustment. A device 4 is a sink-end device, and after receiving the CR signal from the upstream device 3, the sink-end device accomplishes a preparation operation, and sends back a timeslot adjustment acknowledgment signal CA and timeslot serial numbers for adjustment to the upstream device 3. After the intermediate device 3 receives the acknowledgment signal CA from the downstream device 4, the intermediate device 3 then sends back a timeslot adjustment acknowledgment signal CA and timeslot serial numbers for adjustment to the upstream device 2. Similarly, after the intermediate device 2 receives the timeslot adjustment acknowledgment signal CA from the downstream device 3, the intermediate device 2 then sends back a timeslot adjustment acknowledgment signal CA and timeslot serial numbers for adjustment to the upstream device 1. The device 1 is a source-end device, and after receiving a downstream timeslot adjustment acknowledgment signal CA and timeslot serial numbers for adjustment, the source-end device determines that sent-back timeslot serial numbers are consistent with requested timeslot numbers, and determines that a negotiation operation is accomplished among the source-end device, a sink-end device, and all intermediate devices, in which case a timeslot adjustment negotiation is successful among all devices, then the source-end device 1 transmits an adjustment indication signal C to a downstream device. If an adjustment negotiation between some devices in a network is unsuccessful, the source-end device 1 will not receive an acknowledgment signal CA, and the source-end device 1 will not transmit an adjustment indication signal C. In this case, the devices will not carry a client service based on a new timeslot quantity, and the devices will continue to carry the client service based on an original timeslot quantity. This avoids the problems of inconsistent end-to-end bandwidths and timeslot adjustment rollback in conventional timeslot adjustments, which are caused by a successful negotiation between some devices and an unsuccessful negotiation between other devices. If adjustment negotiation between some devices in a network fails and a source-end device fails to receive a timeslot adjustment acknowledgment signal CA, the source-end device can repeatedly or continuously transmit a timeslot adjustment request signal CR until the timeslot adjustment acknowledgment signal CA is received. If a source-end device continuously fails to receive a timeslot adjustment acknowledgment signal CA within a predefined period of time, the source-end device determines that an end-to-end link failure occurs, terminates transmitting a timeslot adjustment request signal CR, and terminates the timeslot adjustment operation.

When a source-end device 1 receives a timeslot adjustment acknowledgment signal CA and timeslot serial numbers for adjustment sent back by a downstream device, and determines that sent-back timeslot serial numbers are consistent with requested timeslot serial numbers, the source-end device 1 then transmits an adjustment indication signal C to a downstream device 2. At the same time, the source-end device 1 carries a client service based on a new timeslot scheme. The downstream device 2 receives the adjustment indication signal C and also forwards the client service based on the new timeslot scheme, thereby accomplishing a timeslot adjustment operation between the source-end device 1 and the downstream device 2. When an intermediate device 2 receives an adjustment indication signal C from an upstream device 1, the intermediate device 2 transmits an adjustment indication signal C to a downstream device 3. The intermediate device 2 carries a client service based on a new timeslot scheme. The downstream device 3 receives the adjustment indication signal C and also forwards the client service based on the new timeslot scheme, thereby accomplishing a timeslot adjustment operation between the intermediate device 2 and the downstream device 3. Likewise, when an intermediate device 3 receives an adjustment indication signal C from an upstream device 2, the intermediate device 3 also transmits an adjustment indication signal C to a downstream device 4. At the same time, the intermediate device 3 carries the client service based on the new timeslot scheme. The downstream device 4 receives the adjustment indication signal C and also extracts the client service based on the new timeslot scheme, thereby accomplishing the timeslot adjustment operation between the intermediate device 3 and the downstream device 4. After the sink device completes the timeslot adjustment, the end-to-end timeslot adjustment is completed. After accomplishing a timeslot adjustment, a sink-end device notifies a source-end device that the timeslot adjustment is successful. If the source-end device fails to receive an adjustment success indication signal from the sink-end device within a predefined time period, the source-end device may retransmit the adjustment indication signal C once. Alternatively, the source-end device may continuously transmit the adjustment indication signal C, and stop transmitting the adjustment indication signal C once receiving the adjustment success indication signal from the sink-end device.

In the above scheme, timeslot adjustment negotiation is performed end-to-end between a source-end device and a sink-end device, and an intermediate device participates in the timeslot adjustment negotiation. The intermediate device sequentially transmits a timeslot adjustment negotiation signal in a relay manner, thereby implementing a handshake negotiation mechanism regarding timeslot adjustment between the source-end device and the sink-end device. When a successful negotiation between a source-end device and a sink-end device is achieved, a successful negotiation regarding timeslot adjustment among the source-end device, the sink-end device, and all intermediate devices in a network is achieved. The timeslot adjustment operation is sequentially performing starting from the source-end device only after a successful handshake negotiation regarding timeslot adjustment among all devices is achieved. The end-to-end timeslot adjustment method in the above scheme can be employed to a timeslot increase or a timeslot reduction, with the timeslot adjustment negotiation and execution of timeslot adjustment performed between a source-end device and a sink-end device. For the adjustment of timeslot increase, the client service bandwidth is not increased and the initial bandwidth remains until the end-to-end adjustment of timeslot increase is completed. As such, even if the bandwidth between upstream devices is large and the bandwidth between downstream nodes is small during the end-to-end adjustment of timeslot increase, the client's service bandwidth remains the initial bandwidth, and the client's service bandwidth is consistent with the downstream devices. Hence, even if the upstream pipeline bandwidth is large, the effective client's service bandwidth does not increase, so no service overflow occurs. As illustrated in FIG. 5, initially, only 1 timeslot is configured to transmit a client service between a device 1 and a device 2, between a device 2 and a device 3, and between a device 3 and a device 4, and a client service bandwidth associated with one timeslot is only 10 MHz. When a bandwidth is required to be adjusted to 20 MHz, a client service bandwidth initially remains maintained at an initial bandwidth of 10 MHz. During an adjustment process, initially, timeslots of a source-end device 1 and an intermediate device 2 are adjusted from 1 timeslot to 2 timeslots, and a carrying bandwidth is changed to 20MHz. One timeslot is still maintained between an intermediate device 2 and an intermediate device 3, and between the intermediate device 3 and a sink-end device 4, to transmit the client service at a rate of 10 Mbps. At a source-end device 1, when a client service at a rate of 10 Mbps is carried on 2 timeslots, since a client service rate is less than a carrying timeslot rate, a large amount of idle information, including, without limitation, idle code blocks, is required to be inserted into the client service. After the large amount of idle information is added, a total rate is increased to 20 Mbps, and the client service is then carried on the 2 timeslots. At intermediate device 2, a client stream from source-end device 1 is received, a large amount of idle information inserted into the client stream is removed, and a rate of a remaining client service can be carried on 1 timeslot. The intermediate device 2 carries the client service on one timeslot after removing the idle information and transfers the client service to intermediate device 3. When an adjustment from 1 timeslot to 2 timeslots between device 2 and device 3 is achieved, device 2 does not remove the idle information upon receiving a client stream from device 1, and device 3 carries the client service on 2 timeslots based on the new timeslot scheme. When an adjustment from 1 timeslot to 2 timeslots between device 3 and device 4 is achieved, a quantity of end-to-end carrying pipeline timeslots between device 1 and device 4 is adjusted to 2 timeslots, and a client service at a rate of 20 Mbps is carried. A client service rate is adjusted to 20 Mbps only after an end-to-end timeslot quantity adjustment is successfully achieved. For the adjustment of timeslots increase, the timeslot adjustment of end-to-end devices is completed first, and then the rate of the client's service is increased and adjusted. Likewise, for an adjustment of reducing a timeslot quantity, a client service rate is reduced and adjusted first, and then a timeslot adjustment is performed between end-to-end devices. A client service rate is consistently maintained to be less than a carrying rate on any device in a carrying pipeline of the end-to-end devices. For any device, when the upstream timeslot bandwidth is greater than the downstream timeslot bandwidth, a large amount of idle information in the upstream client service is deleted, and then the client's service is sent to the downstream timeslot. When the bandwidth of the upstream timeslot is smaller than that of the downstream timeslot, a large amount of idle information is inserted into the upstream client's service and then sent to the downstream timeslot. Additionally, if an intermediate node receives an adjustment indication signal C, an adjustment indication is immediately transmitted downstream, and a timeslot increase adjustment downstream is also initiated immediately. In this way, the timeslot increase adjustment begins from a source-end device. From an upstream device to a downstream device, the timeslot increase adjustment is sequentially performed among all devices downward in a relay manner, and an adjustment between the upstream device and the downstream device is sequentially performed. The issue of inconsistent timeslot quantities and inconsistent bandwidths between the upstream device and the downstream device merely exists instantaneously. Thereafter, a timeslot quantity between the upstream device and the downstream device quickly becomes consistent, and a bandwidth inconsistency problem will not occur.

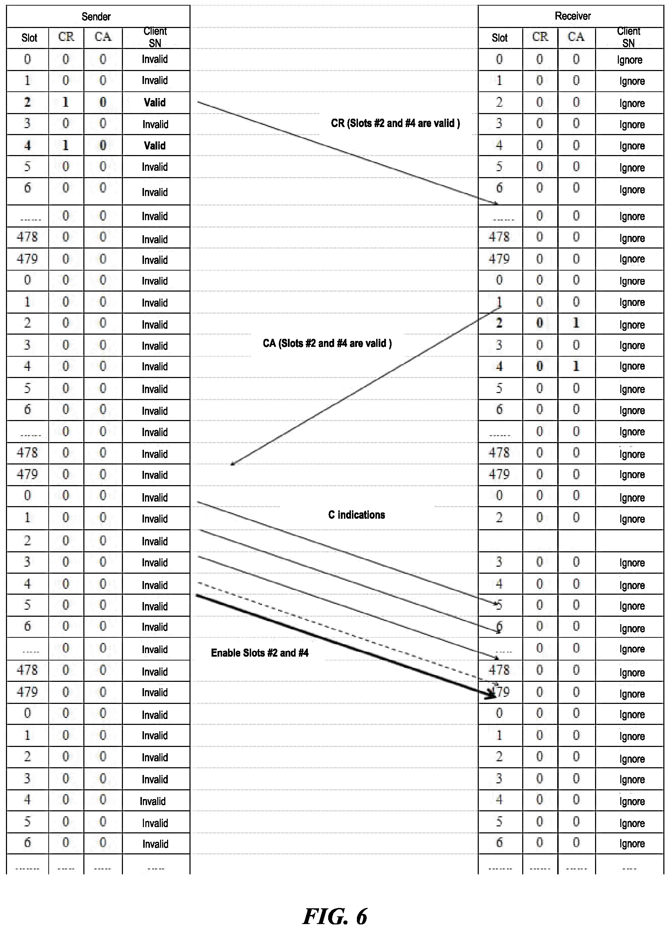

During a timeslot adjustment, source-end device and a sink-end device perform a handshake negotiation through an adjustment request signal CR and an adjustment acknowledgment signal CA. The timeslot negotiation handshake may be performed with a so-called "all-involved" timeslot adjustment method, in which adjustment request state information for all timeslots is periodically transmitted, and acknowledgment information for all timeslots is then periodically sent back. After receiving the acknowledgment information for all timeslots, device 1 initiates an adjustment and transmits a timeslot adjustment indication signal C. FIG. 6 is a schematic diagram illustrating a timeslot negotiation handshake according to an embodiment of the present application. In FIG. 6, device 1 can periodically transmit timeslot adjustment request state information for all timeslots to device 2. After receiving the timeslot adjustment request state information, device 2 periodically forwards the timeslot adjustment request state information to device 3. After receiving the timeslot adjustment request state information, device 3 periodically forwards the timeslot adjustment request state information to device 4. Once device 4 receives the timeslot adjustment request state information, device 4 periodically sends back a timeslot adjustment acknowledgment signal for all timeslots to device 3. After receiving the timeslot adjustment acknowledgment signal, device 3 periodically sends back the timeslot adjustment acknowledgment signal for all timeslots to device 2. After receiving the timeslot adjustment acknowledgment signal, device 2 periodically sends back the timeslot adjustment acknowledgment signal for all timeslots to device 1. After device 1 receives the timeslot adjustment acknowledgment signal for all timeslots, an adjustment indication signal C is transmitted, and adjusted timeslots are enabled. In the so-called "all-involved" timeslot adjustment mode, adjustment request state information of all timeslots and acknowledgment information of all timeslots are periodically transmitted, regardless of whether a timeslot of the timeslots is involved in an adjustment. If a total of 480 timeslots are provided, every 480 frames are configured as one multi-frame, where adjustment state information of one timeslot is transmitted by each frame in the multi-frame. In particular, adjustment state information of timeslot #0 is transmitted by a 0-th frame, adjustment state information of timeslot #1 is transmitted by a 1-st frame, adjustment state information of timeslot #2 is transmitted by a 2-nd frame, likewise, adjustment state information of timeslot #479 is transmitted by a 479-th frame. The adjustment state information of all the timeslots is completely transmitted through one multi-frame period. In FIG. 6, timeslot #2 and timeslot #4 actually participate in the timeslot adjustment, with the CR values thereof set to '1', indicating that a timeslot adjustment is requested, whereas CR values of the other timeslots are '0', indicating not participating in the timeslot adjustment. Since client serial numbers of timeslot #2 and timeslot #4 are changed from a previous invalid state to a valid state, a timeslot increase adjustment is indicated. The adjustment state information of all the timeslots is completely transmitted by device 1 to device 2 within one multi-frame period. After receiving the adjustment state information, device 2 completely transmits the adjustment state information of all the timeslots to device 3 within one multi-frame period. After receiving the adjustment state information, device 3 completely transmits the adjustment state information of all the timeslots to device 4 within one multi-frame period. After device 4 completes receiving the adjustment state information of all the timeslots, acknowledgment information of all the timeslots is sent back to device 3. After receiving the acknowledgment information, device 3 sends back the acknowledgment information of all the timeslots to device 2 within one multi-frame period. After receiving the acknowledgment information, device 2 sends back the acknowledgment information of all the timeslots to device 1 within one multi-frame period. The acknowledgment information of all the timeslots is completely received by device 1 within one multi-frame period. Since only timeslot #2 and timeslot #4 are requested to participate in the adjustment, in the acknowledgment information sent back by all devices, only adjustment acknowledgment signal CA information of timeslot #2 and timeslot #4 is valid (e.g., CA=1), whereas the acknowledgment information of the other timeslots is invalid (e.g., CA=0).

After device 1 completely receives all the acknowledgment CA information sent back, device 1 successively transmits a plurality of adjustment indication signals C. In order to increase reliability, adjustment indication C information can be transmitted a plurality of times. For example, the adjustment indication C information is transmitted three times, and a majority judgment principle is adopted by a receiving end (e.g., when valid adjustment indication C signals appear two or more times, an adjustment indication signal C is determined to be valid; when invalid adjustment indication C signals appear two or more times, the adjustment indication signal C is determined to be invalid). A timeslot quantity is then adjusted by an initiating device and a receiving device based on an agreed time reference. As illustrated in FIG. 6, the newly added timeslot #2 and timeslot #4 are enabled at an agreed moment, and a moment with dotted line is adopted by both the initiating device and the receiving device as a moment for enabling new timeslots after the adjustment. In order to enable the new timeslots to carry a client service, the new timeslots are generally enabled at a starting position of a bearer frame. If a moment for enabling the new timeslots is located at an intermediate position of a frame, a current bearer frame continues to carry the client service based on original old timeslots, and the new timeslots are enabled to carry the client service only at a start of a subsequent frame. The dotted line in FIG. 6 is an agreed reference moment between device 1 and device 4 for enabling the new timeslots, but actual enabling of the new timeslots is at a starting position of an adjacent subsequent bearer frame, with a starting position of the bearer frame, namely a first timeslot, configured as the starting position, as shown by a bolded solid line in FIG. 6. Both device 1 and device 4 enable the new timeslots to carry the client service at the bolded solid line, which is a start moment of the subsequent bearer frame.

When a timeslot adjustment is performed, in order to implement a synchronized variation between a bandwidth variation of a client service and a quantity of timeslots carrying the corresponding client service, a timeslot adjustment indication signal is inserted into a client stream when a bandwidth of the client service needs to be changed, and the timeslot adjustment indication signal is transmitted along with the client stream. The timeslot adjustment indication signal is indicative of both a variation moment of a client service bandwidth, and indicating an adjustment moment of the timeslots carrying the client service. The bandwidth of the client service is changed based on the adjustment indication signal, and the quantity of the timeslots carrying the client service is also changed based on the adjustment indication signal, such that the quantity of the timeslots carrying the client service adapts to a bandwidth variation of the client service. The timeslot adjustment indication signal is carried in the client stream. The timeslot adjustment indication signal represents an adjustment moment of a client stream bandwidth. The timeslot adjustment indication signal is transmitted in a network along with the client stream. When the timeslot adjustment indication signal is transmitted across each device in the network, a carrying timeslot quantity of a passing device is synchronously adjusted by the passing device based on the timeslot adjustment indication signal carried in the client stream, and the client service is carried based on a new timeslot quantity. When the client service bandwidth changes, a timeslot quantity is also adjusted in a roughly synchronous manner by corresponding devices, such that the client service bandwidth variation and the timeslot quantity variation are performed in a roughly synchronous manner, reducing a total asynchronous duration caused by an inconsistency between a client service bandwidth variation moment and a timeslot quantity variation moment.

Compared with a conventional hop-by-hop negotiation and hop-by-hop adjustment mechanism, after an end-to-end timeslot adjustment negotiation succeeds, an operation of adjusting timeslots is initiated by transporting an indication signal for the timeslot adjustment via a client service, such that negotiation time is reduced, serious consequences encountered when adjustment negotiation is unsuccessful during a hop-by-hop adjustment are circumvented, a rollback requirement when adjustment is unsuccessful is circumvented, adjustment negotiation time is saved, and an adjustment success probability is improved. However, when a service bandwidth variation moment is not aligned with a timeslot quantity variation moment, since a transmission rate difference exists between the service bandwidth variation moment and the timeslot quantity variation moment, a buffer is required to temporarily store the client service to adapt to the transmission rate difference. The longer an asynchronous duration between the service bandwidth variation moment and the timeslot quantity variation moment is, the larger a service volume required to be buffered is, and the higher a hardware cost is.

In order to reduce an asynchronous duration between a client service bandwidth variation moment and a timeslot quantity variation moment, whereby a buffered service quantity can be effectively reduced and a cost and a client latency are lowered, a method for timeslot adjustment, a communication device, and a computer-readable storage medium are provided in embodiments of the present application. According to the method, after a timeslot adjustment strategy is determined through negotiation with a downstream node and a sink node, a timeslot adjustment can be accomplished by a head node at a timeslot adjustment moment by employing the timeslot adjustment strategy, and a plurality of timeslot adjustment indications are transmitted to the sink node through the downstream node, to allow the downstream node and the sink node to determine the timeslot adjustment moment based on the plurality of timeslot adjustment indications, and accomplish the timeslot adjustment at the timeslot adjustment moment by employing the timeslot adjustment strategy. Therefore, an asynchronous duration between the client service bandwidth variation moment and the timeslot quantity variation moment can be reduced, whereby a buffered service quantity can be reduced, and the equipment cost and client latency are lowered down.

Several embodiments of the present application will be further illustrated with reference to the drawings.

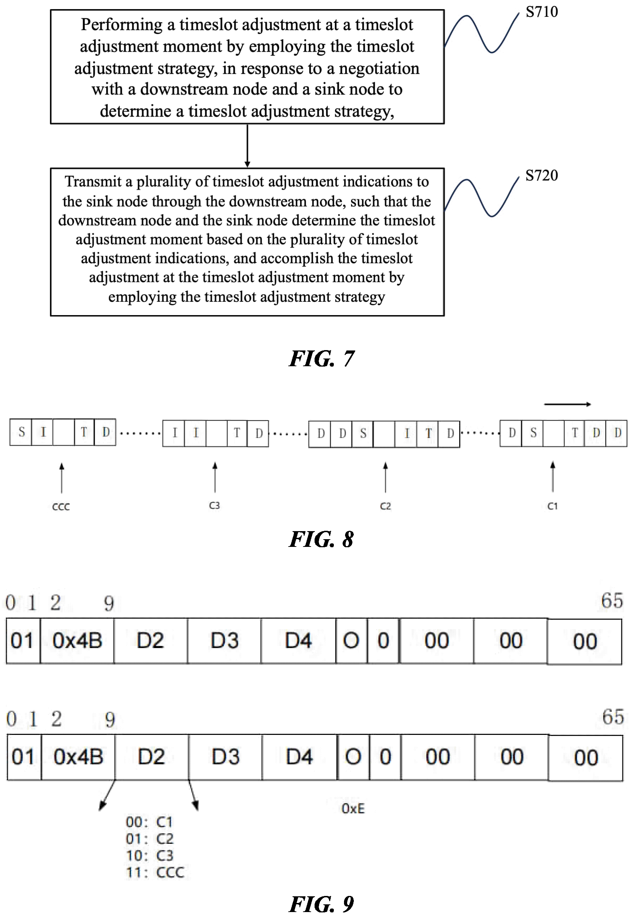

FIG. 7 is a flowchart illustrating a method for timeslot adjustment according to an embodiment of the present application. The method is applicable to a head node. The method may include, without limitation, operations S710 to S720.

At operation S710, in response to a negotiation with a downstream node and a sink node to determine a timeslot adjustment strategy, a timeslot adjustment is accomplished at a timeslot adjustment moment by employing the timeslot adjustment strategy.

At operation S720, a plurality of timeslot adjustment indications are transmitted to the sink node through the downstream node, such that the downstream node and the sink node determine the timeslot adjustment moment based on the plurality of timeslot adjustment indications, and accomplish the timeslot adjustment at the timeslot adjustment moment by employing the timeslot adjustment strategy.

In a feasible embodiment, when a client service is in a transmission state and timeslot adjustment information needs to be inserted into a client stream, a bandwidth increase adjustment request can be initiated by the head node. After the head node determines the timeslot adjustment strategy with the downstream node and the sink node, indication information of the timeslot adjustment can be transmitted to the sink node through the downstream node, such that during a client stream transmission process, the timeslot adjustment can be accomplished by each node at a determined timeslot adjustment moment by employing the timeslot adjustment strategy. The asynchronous duration between a client service bandwidth variation moment and a timeslot quantity variation moment is reduced, such that a buffered service quantity can be reduced, and the equipment cost and client latency are lowered down.

The client stream may be general Ethernet service information or service information of high quality of service (QoS). For instance, the service information of high QoS may be a CBR service, Ethernet service information of high QoS (e.g., ethernet Common Public Radio Interface (eCPRI) service information), voice service information, video service information, gaming service information, or the like, and the present application is not limited thereto. In this regard, the service information of high QoS can be encapsulated in various formats, such as an eCPRI protocol message format or an Ethernet packet format. The general Ethernet service information may be download service information, or the like, and the present application is not limited thereto.

In a feasible embodiment, timeslot switchover moment indication can also be transmitted by the head node to the sink node through the downstream node, wherein the timeslot switchover moment indication is indicative of the timeslot adjustment moment.

In a feasible embodiment, timeslot switchover moment indication may also be carried in a timeslot switchover moment code block in the client stream. The timeslot adjustment moment may include one of the following three conditions: the timeslot adjustment moment is a subsequent timeslot of a timeslot that contains the timeslot switchover moment code block; the timeslot adjustment moment is a starting position or a first timeslot of a subsequent bearer frame of a bearer frame that contains the timeslot switchover moment code block; the timeslot adjustment moment is a starting position of a first bearer frame in a subsequent multi-frame of a multi-frame that contains the timeslot switchover moment code block, or a first timeslot of the first bearer frame in the next multi-frame.

In a feasible embodiment, the timeslot adjustment indication may be configured to indicate that the timeslot adjustment strategy comes into force. In addition, the plurality of timeslot adjustment indications may also be carried in a plurality of timeslot adjustment indication code blocks in the client stream.

In a feasible embodiment, when timeslot switchover moment indication is carried in a timeslot switchover moment code block in the client stream, an equal or unequal quantity of first code blocks may be present between two adjacent timeslot adjustment indication code blocks, and between the timeslot switchover moment code block and a last transmitted timeslot adjustment indication code block.

In a feasible embodiment, when timeslot switchover moment indication is carried in a timeslot switchover moment code block in the client stream, a first quantity of first code blocks may be present between two adjacent timeslot adjustment indication code blocks, and a second quantity of first code blocks may be present between the timeslot switchover moment code block and a last transmitted timeslot adjustment indication code block. It should be noted that the second quantity is not equal to the first quantity.

In a feasible embodiment, the timeslot switchover moment code block may be determined based on the first quantity and a position of any one timeslot adjustment indication code block.

In a feasible embodiment, the timeslot switchover moment code block corresponds to an expected position in the client stream, and the expected position may be determined based on the first quantity and a position of any one timeslot adjustment indication code block. When a code block corresponding to the expected position is a code block within a data packet, the timeslot switchover moment code block is a first code block immediately following an end code block in the data packet.

In a feasible embodiment, the timeslot adjustment indication code block and the timeslot switchover moment code block have an identical code block type, and a timeslot adjustment function field is included in both the timeslot adjustment indication code block and the timeslot switchover moment code block. A timeslot adjustment function field in a timeslot adjustment indication code block is configured to carry a timeslot adjustment indication, and a timeslot adjustment function field in a timeslot switchover moment code block is configured to carry a timeslot switchover moment indication.

In a feasible embodiment, a synchronization header bit, a control word, and a type sequence value are further included in both the timeslot adjustment indication code block and the timeslot switchover moment code block. A combination of the synchronization header bit, the control word, and the type sequence value is employed as a flag value indicative of the timeslot adjustment indication code block or the timeslot switchover moment code block.

According to this embodiment, by adopting the method for timeslot adjustment including operation S710 to operation S720 discussed above, after the timeslot adjustment strategy is determined through negotiation with the downstream node and the sink node, the timeslot adjustment may be accomplished by the head node at the timeslot adjustment moment by employing the timeslot adjustment strategy, and a plurality of timeslot adjustment indications are transmitted to the sink node through the downstream node, to allow the downstream node and the sink node to determine the timeslot adjustment moment based on the plurality of timeslot adjustment indications, and accomplish the timeslot adjustment at the timeslot adjustment moment by employing a corresponding timeslot adjustment strategy. Therefore, an asynchronous duration between the client stream bandwidth variation moment and the timeslot quantity variation moment may be reduced, such that a buffered client stream quantity may be reduced, and a network overhead cost and client service latency are lowered down.

In an embodiment, the plurality of timeslot adjustment indications may be carried in a plurality of timeslot adjustment indication code blocks in the client stream, and the timeslot adjustment moment is determined based on a position of any one of the timeslot adjustment indication code blocks.

In an embodiment, a third quantity of first code blocks may be present between two adjacent timeslot adjustment indication code blocks. The timeslot adjustment moment may be determined based on a timeslot adjustment reference moment, and the timeslot adjustment reference moment may be determined based on the third quantity and a position of any one of the timeslot adjustment indication code blocks.

In an embodiment, the timeslot adjustment moment includes one of:
the timeslot adjustment moment is a subsequent timeslot immediately following a timeslot that contains the timeslot adjustment reference moment;
the timeslot adjustment moment is a starting position or a first timeslot of a subsequent bearer frame immediately following a bearer frame associated with the timeslot adjustment reference moment;
the timeslot adjustment moment is a starting position of a first bearer frame in a subsequent multi-frame immediately following a multi-frame associated with the timeslot adjustment reference moment, or a first timeslot of the first bearer frame in the subsequent multi-frame.

In an embodiment, a fourth quantity of first code blocks may be present between a position associated with the timeslot adjustment reference moment and a last transmitted timeslot adjustment indication code block. It should be noted that the fourth quantity is less than or equal to the third quantity.

In an embodiment, a timeslot adjustment function field is further included in the timeslot adjustment indication code block, where the timeslot adjustment function field may be configured to carry the timeslot adjustment indication.

In an embodiment, when a first code block stream is mapped to a first transmission container, the plurality of timeslot adjustment indications may be carried in an Operations, Administration, and Maintenance (OAM) code block in the client stream.

In an embodiment, when an APS code block is included in the OAM code block, the plurality of timeslot adjustment indications may be respectively carried in a Base1 code block, the APS code block, and a Base2 code block in the OAM code block. The timeslot adjustment moment may be determined based on a position of a first Base1 code block immediately following the Base2 code block that carries the timeslot adjustment indication.

Alternatively, when no APS code block is included in the OAM code block, a pseudo-APS code block is configured between a Base1 code block and a Base2 code block in the OAM code block. The plurality of timeslot adjustment indications may be respectively carried in the Base1 code block, the pseudo-APS code block, and the Base2 code block. The timeslot adjustment moment is determined based on a position of a first Base1 code block immediately following the Base2 code block that carries the timeslot adjustment indication.

Alternatively, when an APS code block is included in the OAM code block, a pseudo-Automatic Protection Switching (APS) code block may be configured at a position immediately preceding or immediately following the APS code block. The plurality of timeslot adjustment indications may be respectively carried in a Base1 code block, the pseudo-APS code block, and a Base2 code block in the OAM code block. The timeslot adjustment moment may be determined based on a position of a first Base1 code block immediately following the Base2 code block that carries the timeslot adjustment indication.

In an embodiment, when an APS code block is comprised in the OAM code block, a first APS sub-block and a second APS sub-block may be included in the APS code block.

In an embodiment, when an L code block is included in an OAM code block, the plurality of timeslot adjustment indications may be respectively carried in a Base1 code block, a Base2 code block, and the L code block in the OAM code block. The timeslot adjustment moment may be determined based on a position of a first Base1 code block immediately following the L code block that carries the timeslot adjustment indication.

Alternatively, when an L code block is not included in the OAM code block, a pseudo-L code block may be configured at a position corresponding to the L code block in the OAM code block. The plurality of timeslot adjustment indications may be respectively carried in a Base1 code block, a Base2 code block, and the pseudo-L code block in the OAM code block. The timeslot adjustment moment may be determined based on a position of a first Base1 code block immediately following the pseudo-L code block that carries the timeslot adjustment indication.

Alternatively, when an L code block is included in the OAM code block, a pseudo-L code block may be configured at a position immediately preceding or immediately following the L code block. The plurality of timeslot adjustment indications may be respectively carried in a Base1 code block, a Base2 code block, and the pseudo-L code block in the OAM code block. The timeslot adjustment moment may be determined based on a position of a first Base1 code block immediately following the pseudo-L code block that carries the timeslot adjustment indication.

In an embodiment, a verification bit may be included in the timeslot adjustment indication code block, where the verification bit may be configured to verify correctness of the timeslot adjustment indication.

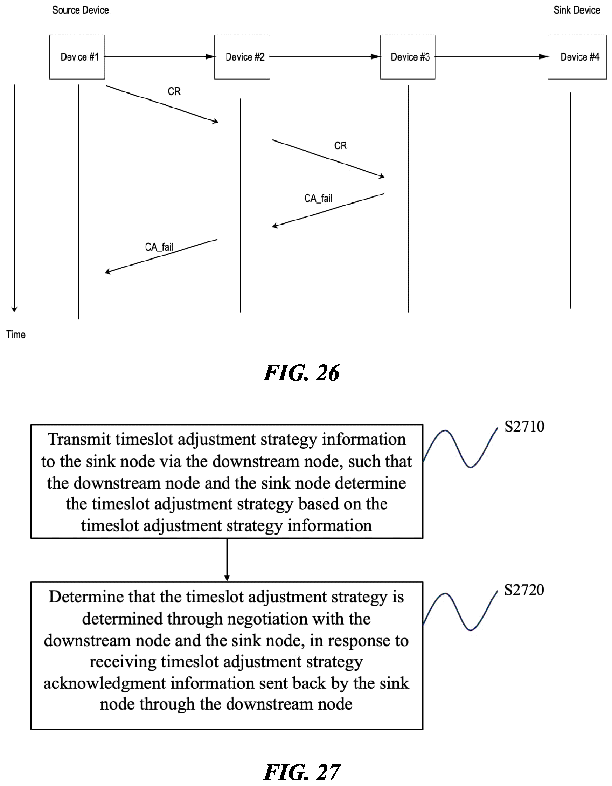

FIG. 27 is a flowchart illustrating a method for determining a timeslot adjustment strategy through negotiation by a head node according to an embodiment of the present application. As illustrated in FIG. 27, when a timeslot adjustment strategy is determined through negotiation with a downstream node and a sink node by a head node, a procedure of determining the timeslot adjustment strategy may include, but is not limited to, operation S2710 to operation S2720.

At operation S2710, timeslot adjustment strategy information is transmitted to the sink node through the downstream node, such that the downstream node and the sink node determine the timeslot adjustment strategy based on the timeslot adjustment strategy information.

At operation S2720, in response to receiving timeslot adjustment strategy acknowledgment information sent back by the sink node through the downstream node, it is determined that the timeslot adjustment strategy is determined through negotiation with the downstream node and the sink node.

In an embodiment, the timeslot adjustment strategy information includes timeslot adjustment application information and information about adjustment. The timeslot adjustment application information is intended to request timeslot adjustment. The information about adjustment is intended to determine the strategy of the timeslot adjustment strategy.

The method for timeslot adjustment according to the embodiments of the present application is described in detail below by way of examples.

FIG. 8 is a schematic diagram illustrating insertion of timeslot adjustment information into a client stream according to an embodiment of the present application. In related art, an Ethernet packet is transmitted by being encoded into fixed-length code blocks, and a 66-bit code block is commonly employed. As illustrated in FIG. 8, when a client service is in a transmission state, specially defined code blocks may be inserted into a client stream. Referring to code blocks with a white background in FIG. 8, the specially defined code blocks include a timeslot adjustment indication code block and a timeslot switchover moment code block. The specially defined code blocks may carry corresponding timeslot adjustment indication, where the timeslot adjustment indication includes an indication signal for timeslot adjustment and an indication signal for timeslot switchover. In the example of FIG. 8, the timeslot adjustment indication code block may carry three types of indication signals for timeslot adjustment: C1, C2, and C3. Three data values C1, C2, and C3 form a group, and C1, C2, and C3 are indication signals having an identical function. A so-called majority vote principle is adopted where an indication signal appears three times for confirmation, in order to obtain a correct judgment even in a single-bit error scenario. It should be noted that three-time appearance of time indication signal for confirmation is adopted in this example, and in an implementation may also adopt other quantities of appearance times of time indication signal for confirmation, for example, five-time appearance of time indication signal for confirmation may be adopted. C1, C2, and C3 represent indication signals for timeslot adjustment, and a majority vote principle may be adopted for the three indication signals for timeslot adjustment. When at least two indication signals for timeslot adjustment are valid, a final judgment result of the indication signals for timeslot adjustment indicates a valid indication signal; when at least two indication signals among the three indication signals for timeslot adjustment are invalid, a final judgment result of the timeslot adjustment indication indicates an invalid indication signal. C1, C2, and C3 may represent indication signals for timeslot adjustment, and may also be configured to indicate that a service bandwidth and data of a carrying timeslot are about to change, to implement a pre-notification function for preparation of the adjustment. The timeslot switchover moment code block may carry an indication signal CCC for timeslot switchover. As illustrated in FIG. 8, the CCC signal represents a true execution moment for adjusting a service bandwidth and a quantity of timeslots that carry a client stream. When the indication signal for timeslot adjustment is determined to be valid, a bandwidth of the client stream will change at a moment associated with the CCC signal, and an adjusted timeslot quantity is also synchronously enabled at a moment when each device detects the CCC signal, thereby achieving a synchronous adjustment of the timeslot quantity and the service bandwidth.

It should be noted that in accordance with the Ethernet standard, an *o* code block is a control code block, with a 2-bit synchronization header having a value of "10", a control word having a value of '0x4B', and a value of 34-th to 37-th bits in the *o* code block being an *o* sequence value of the *o* code block. Different sequence values represent different types of the o code block, as illustrated in an upper part of FIG. 9. Currently, according to the standard, five *o* sequence values of '0x0', '0x1', '0x2', '0x5', and '0xF' have been enabled. Therefore, an o code block that carries other sequence values may be defined as a specially defined code block that carries timeslot adjustment information. As illustrated in the lower part of FIG. 9, an *o* code block having a sequence value of '0xE' is configured as a specially defined code block for a timeslot adjustment indication signal.

In an embodiment, a combination of a synchronization header having a value of '10', a control word having a value of '0x4B', and an *o* sequence value of '0xE' may be employed as a flag value of a code block that carries a timeslot adjustment indication. A code block that conforms to the flag value is a code block that carries timeslot adjustment indication. A first byte in an *o* code block is a control word. As shown in FIG. 9, three bytes (D2, D3, and D4) immediately following the control word are data bytes, and the meaning of the data bytes is determined based on an *o* code block sequence value type. When a sequence value of the o code block is defined to indicate a code block that carries a timeslot adjustment indication, timeslot adjustment indication, including, but not limited to, C1 function information, C2 function information, C3 function information, and CCC function information, may be carried in the three bytes D2, D3, and D4. In the lower part of FIG. 9, the value of D2 of '00' indicates a code block for timeslot adjustment indication having a C1 function, the value of D2 of '01' indicates a code block for timeslot adjustment indication having a C2 function, the value of D2 of '10' indicates a code block for timeslot adjustment indication having a C3 function, and the value of D2 of '11 indicates a code block for timeslot adjustment indication having a CCC function. In a specific implementation, the D2 byte may also have other values to indicate C1, C2, C3, and CCC function information. Alternatively, in addition to the D2 byte carrying function information values, the function information values may also be carried by a D3 byte, or carried by a D4 byte.

In an embodiment, as illustrated in FIG. 5, a source device may serve as a head node, a device 2 and a device 3 may serve as intermediate nodes, and a device 4 may serve as a sink node. When timeslots need to be increased, a bandwidth increase adjustment request may be initiated by the source device. Specifically, the source device transmits an adjustment request signal CR and a corresponding timeslot slot carried by a bearer frame to the device 2. The device 2 is an intermediate device, and may receive the request signal CR and the corresponding timeslot slot; after determination and permission by the device 2, the request signal CR and the corresponding timeslot slot may be forwarded by the device 2 to the device 3. It can be understood that the device 3 is also an intermediate device, and may receive the request signal CR and the corresponding timeslot slot; after determination and permission by the device 3, the request signal CR and the corresponding timeslot slot may be forwarded by the device 3 to the device 4. It should be noted that device 4 is a sink node, and may receive the request signal CR and the corresponding timeslot slot. After determination and permission by the device 4, an acknowledgment signal CA and the corresponding timeslot slot may be returned by the device 4 to the device 3. The acknowledgment signal CA and the corresponding timeslot slot returned by the device 4 may be received by the device 3, and after determination by the device 3, the acknowledgment signal CA and the corresponding timeslot slot are returned to the device 2. The acknowledgment signal CA and the corresponding timeslot slot returned by the device 3 may be received by the device 2, and after determination by the device 2, the acknowledgment signal CA and the corresponding timeslot slot are returned to the source device 1. Once the source device 1 receives the acknowledgment information CA and the timeslot returned by the device 2, it is determined that the acknowledgment information CA for all adjusted timeslots has been received. Specially defined code blocks that carry a timeslot adjustment indication are inserted into a client stream by the source device, and specially defined code blocks respectively carrying timeslot adjustment indication values C1, C2, and C3 are transmitted three times. The specially defined code blocks and client stream code blocks are transmitted together to the device 2. Thereafter, a specially defined code block that carries a timeslot switchover moment indication value CCC may be inserted by the source device 1 at an agreed moment, and a bandwidth of the client stream is correspondingly increased and adjusted. After transmitting the specially defined code block that carries a timeslot switchover moment indication signal CCC value, the source device 1 increases a quantity of timeslots that carry the client stream accordingly. A receiving side of the device 2 may detect code block types in the client stream during reception of the client stream. If specially defined code blocks that carry timeslot adjustment indication values C1, C2, and C3 are detected in a client stream, a final value of the timeslot adjustment indication is determined to be a valid indication based on the majority vote principle, and timeslot adjustment preparation is completed. Subsequently, a specially defined code block that carries a timeslot switchover moment indication value CCC in the client stream is detected. The receiving side of the device 2 also synchronously increases a quantity of timeslots at a position where the specially defined code block that carries the timeslot switchover moment indication value CCC is detected, and the client stream may be extracted based on the new quantity of timeslots. When the client stream is transmitted to a transmitting side of the device 2, the transmitting side of the device 2 may complete preparation for implementing an adjustment upon detecting the specially defined code blocks that carry the timeslot adjustment indication values C1, C2, and C3. When detecting the specially defined code block that carries the timeslot switchover moment indication value CCC, the transmitting side of the device 2 may also synchronously adjust the quantity of timeslots. When the client stream is transmitted to a receiving side of the device 3, the receiving side of the device 3 may adopt the same operation as the receiving side of the device 2. Likewise, a transmitting side of the device 3 and a receiving side of the device 4 may all operate in the same manner. After the receiving side of the device 4 completes timeslot adjustment, adjustment of a quantity of timeslots from the device 1 to the device 4 is done, thereby the timeslot adjustment is completed.

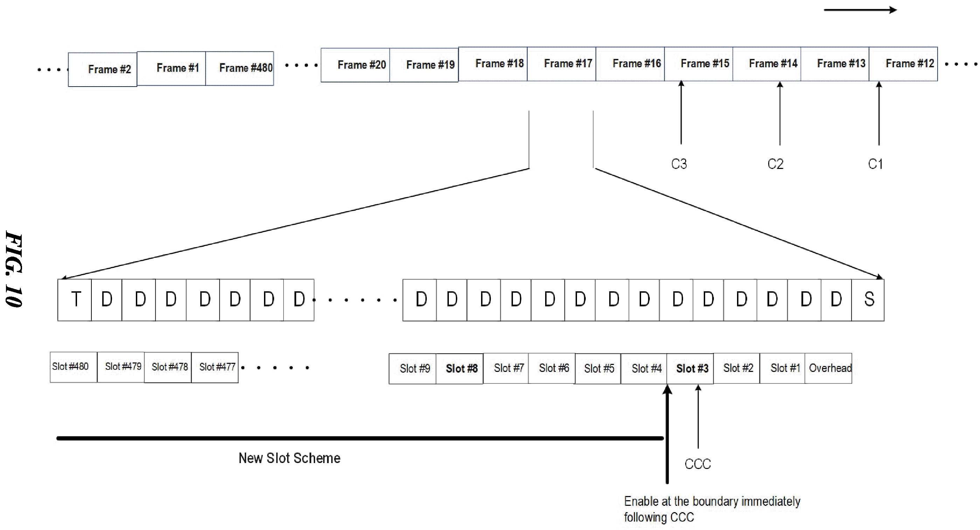

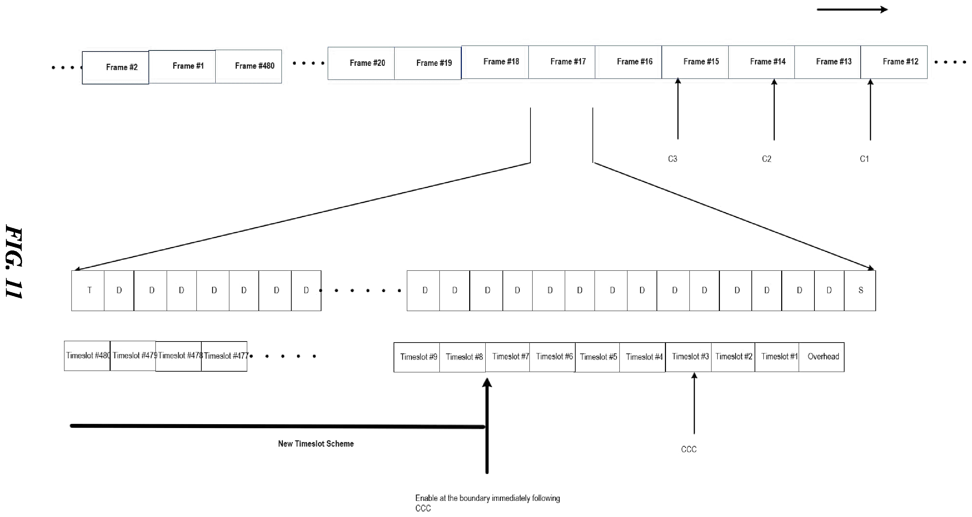

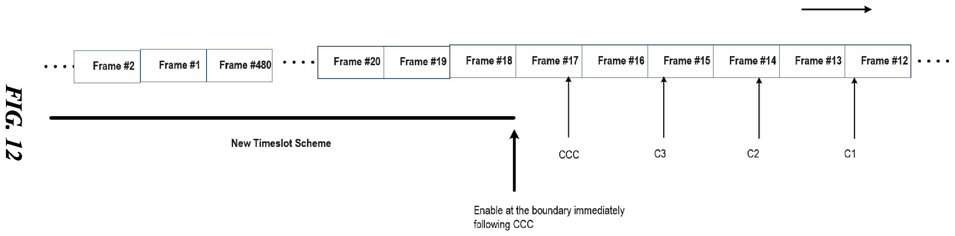

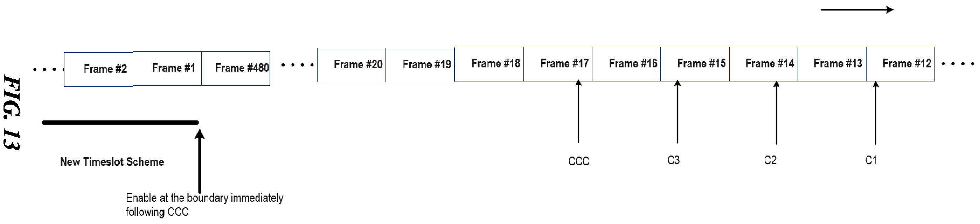

In practical applications, a client stream may be in a form of a code block flow, and client code blocks may be mapped to selected timeslots in a bearer frame illustrated in FIG. 1 to be carried. The client stream is carried only on correspondingly selected timeslots in the bearer frame. For example, a client stream originally carries a service only on a timeslot #3 and a timeslot #15, and after an adjustment, the service is carried on three timeslots, e.g., the timeslot #3, a timeslot #8, and the timeslot #15, in a selected bearer frame. A bandwidth adjustment performed at this time includes adding the timeslot #8, and after the adjustment, the client stream is carried on the timeslots #3, #8, and #15. Thus, specially defined code blocks that carry a timeslot adjustment indication in the client stream appear on a certain timeslot among the timeslots #3 and #8 in the bearer frame, but whether the specially defined code blocks appear on the timeslot #3 or the timeslot #8 at this time is uncertain. As illustrated in FIG. 10, the specially defined code blocks for the timeslot adjustment indication may appear at an intermediate position in the bearer frame. For the timeslot adjustment indication code blocks that carry timeslot adjustment indication values C1, C2, and C3, a receiving side merely detects the three specially defined code blocks in a client stream. Once the three timeslot adjustment indication code blocks are detected, a final valid result of the adjustment indication may be determined based on the majority vote principle. It may be understood that different positions of the three timeslot adjustment indication code blocks in the bearer frame do not affect the result of the determination. A timeslot switchover moment code block that carries a timeslot switchover moment indication value CCC may also appear on any timeslot that carries a client stream. In FIG. 10, the timeslot switchover moment code block that carries the timeslot switchover moment indication value CCC may appear on timeslot #3. In this case, timeslot #3 becomes a reference moment point for adjustment of the quantity of timeslots. With timeslot #3 configured as a reference moment point, starting from a next timeslot (that is, timeslot #4), the client stream is carried on timeslot #3, a timeslot #8, and a timeslot #15 (previously carried on timeslot #3 and timeslot #15), as illustrated in FIG. 10. In an application of the present example, although timeslots that carry a client stream are updated from timeslot #3 and timeslot #15 to timeslot #3, timeslot #8, and timeslot #15 starting from timeslot #4, timeslot #4, timeslot #5, timeslot #6, and timeslot #7 do not belong to the present client. Therefore, timeslot #4, timeslot #5, timeslot #6, and timeslot #7 do not carry the client stream of the present client. In a practical application, as illustrated in FIG. 11, after timeslot #3, a next valid timeslot that carries the present client may be timeslot #8. Timeslot #8 may be configured as a reference moment point, and a switchover to a new quantity of timeslots begins from timeslot #8. In the present frame, starting from timeslot #8, carrying the client stream on a combination of the original timeslot #3 and timeslot #15 is changed to carrying the client stream on a combination of timeslot #3, timeslot #8, and timeslot #15. In a specific application, in addition to configuring a timeslot position immediately following a timeslot switchover moment code block that carries a timeslot switchover moment indication value CCC as a reference moment point to initiate a timeslot adjustment, a starting position of an immediately subsequent bearer frame (i.e., a first timeslot of the immediately subsequent bearer frame) following the timeslot switchover moment code block that carries the timeslot switchover moment indication value CCC may also be configured as a reference moment point to initiate a timeslot adjustment. As illustrated in FIG. 12, a combination of a timeslot #3 and a timeslot #15 that carries the client stream may be replaced by a combination of the timeslot #3, a timeslot #8, and the timeslot #15. In a practical application, as illustrated in FIG. 13, a starting position of a first bearer frame in a multiframe of an immediately subsequent bearer frame (i.e., a first timeslot of a first frame in an immediately subsequent multiframe) immediately following a timeslot switchover moment code block that carries a timeslot switchover moment indication value CCC may also be configured as a reference moment point to initiate a timeslot adjustment, and a combination of a timeslot #3 and a timeslot #15 that carries a client stream is replaced by a combination of the timeslot #3, a timeslot #8, and the timeslot #15.

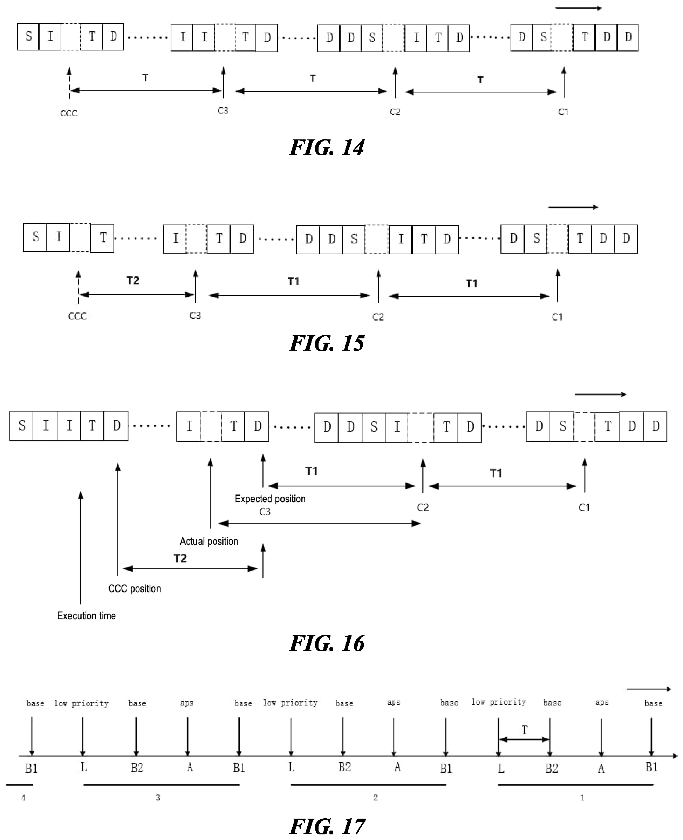

In an embodiment, a plurality of specially defined code blocks that carry a timeslot adjustment indication may be inserted into a client stream, and the plurality of specially defined code blocks are transmitted along with client stream code blocks. The plurality of specially defined code blocks may be transmitted at a fixed period *T.* As illustrated in FIG. 14, the specially defined code blocks are spaced apart by a fixed quantity of client stream code blocks. Once specially defined code blocks that carry a timeslot adjustment indication are transmitted at a fixed period *T*, positions of other specially defined code blocks may be determined based on any one of the specially defined code blocks. For example, based on a position of a specially defined code block that carries a timeslot adjustment indication value C1, positions of specially defined code blocks that carry timeslot adjustment indication values C2 and C3 and a timeslot switchover moment indication value CCC can be predicted. Through any one specially defined code block among C1, C2, and C3, a position of a specially defined code block of a CCC value can also be predicted. Since a specially defined code block that carries a timeslot switchover moment indication value CCC merely functions as a reference moment point for timeslot adjustment, when a specific position of the specially defined code block that carries the timeslot switchover moment indication value CCC may be predicted, the reference moment point may be determined. The specially defined code block does not need to be actually provided, and the specially defined code block that carries the timeslot switchover moment indication value CCC may be omitted. A fixed quantity of client stream code block positions (i.e., a quantity of client stream code blocks in a period *T*) immediately following a position of a code block that carries a timeslot adjustment indication value C3 is configured as the reference moment point for timeslot adjustment. As illustrated in FIG. 14, the specially defined code block that carries the timeslot switchover moment indication value CCC is white to indicate that the specially defined code block does not actually exist and is merely virtually presented in FIG. 14. By setting an agreed reference moment point in advance, a reference moment point for timeslot adjustment may be determined based on specially defined code blocks that carry timeslot adjustment indication values C1, C2, and C3, or the like. An actual code block that carries a timeslot switchover moment indication value CCC is no longer required, and the overhead caused by the actual code block is reduced. In a practical application, the interval between specially defined code blocks that carry timeslot adjustment indication values C1, C2, and C3, or the like, may be the same value T1, and the interval between a timeslot switchover moment code block that carries a timeslot switchover moment indication value CCC or the like, and a timeslot adjustment indication code block that carries a timeslot adjustment indication value C3 or the like, may be another value T2. Both the configuration with equal interval value T1, and the configuration with interval values T1 and T2, fall within the scope of the present application.

In a practical application, since a length of a client message is random and variable, the client message may vary in length, including long client messages and short client messages. In a scenario where insertion of a specially defined code block at an intermediate position of the client message is not allowed, when timeslot adjustment indication code blocks that carry timeslot adjustment indication values C1, C2, and C3, or the like, are inserted at a fixed interval, expected insertion positions of the timeslot adjustment indication code blocks may be at an intermediate position of the client message. In this case, a specially defined code block may only be inserted once transmission of a current client message is completed. As illustrated in FIG. 16, specially defined code blocks that carry timeslot adjustment indication values C1, C2, and C3, or the like, may be inserted and transmitted at equal intervals. An expected position of a specially defined code block indicated by a timeslot adjustment indication value C3 may be at an intermediate position of the client message, but the specially defined code block may not be immediately inserted immediately, and the insertion may only be performed once transmission of the client message is completed. When a specially defined code block is detected at an expected position in a practical application, if the expected position coincides with a position of any of three types of code blocks in a client message (where message code blocks include an S code block, a D code block, and a T code block), an actual position of the specially defined code block is located immediately subsequent to a T code block serving as an end code block of the client message. Regarding an omitted specially defined code block that carries a timeslot switchover moment indication value CCC, since an actual code block is not inserted, position determination is performed based on an expected position of the omitted specially defined code block. A reference moment point for timeslot adjustment (i.e., an expected position of the specially defined code block that carries the timeslot switchover moment indication value CCC) is determined based on an expected position of a specially defined code block that carries timeslot adjustment indication values C1, C2, and C3, or the like, and the code block interval. Referring to FIG. 16, an adjustment reference moment point is calculated to be at a position of a D code block based on specially defined code blocks that carry timeslot adjustment indication values C1, C2, and C3, or the like, and timeslot adjustment may be initiated at the position of the D code block. In a practical application, to facilitate an adjustment of a transmission rate of a client stream, the transmission rate of the client stream is generally changed at a starting position of an immediately subsequent client message once transmission of a current client message is completed, and the transmission rate of the client stream is not changed at a position of a D code block within a client message. In a specific application, although an adjustment reference moment point is calculated to be at a position of a D code block of a client message, when timeslot adjustment is actually performed, the adjustment reference moment point calculated to be at the position of the D code block (which, in addition to the D code block, may be located at a position of an S code block, a T code block, of the client message) may be changed to a position of a first code block immediately following an end T code block of the client message. As illustrated in FIG. 16, the moment of a first code block immediately following a T code block of a current client message is configured as a changed adjustment moment point, which serves as an actual moment for timeslot adjustment.

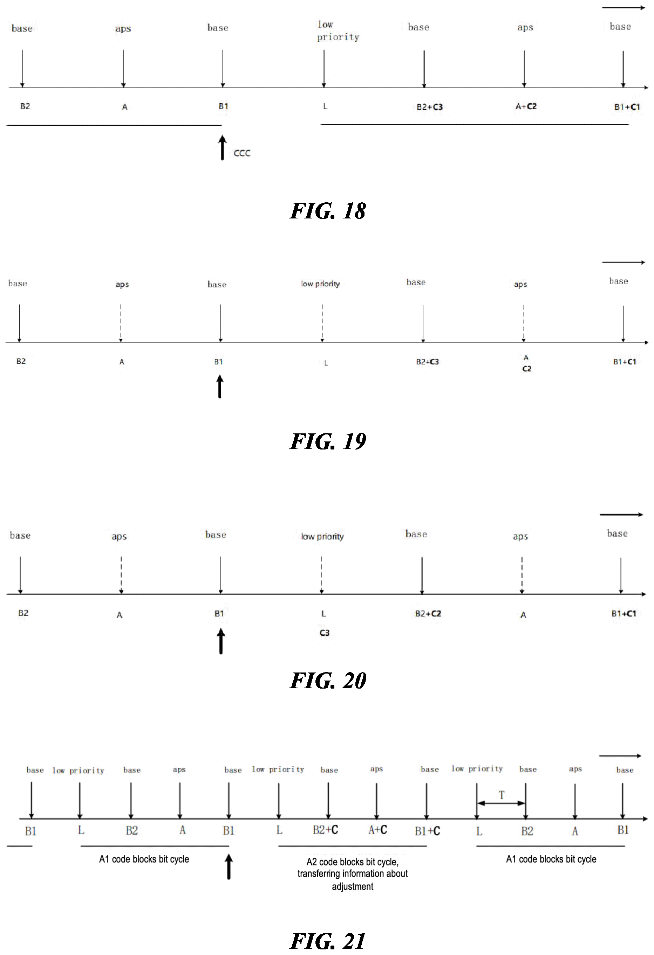

Notably, in an application, to monitor a quality of service of a client stream bearer pipeline, an OAM code block is typically inserted into a client stream, and the quality of service of the client stream bearer pipeline can be determined by monitoring an information status within the OAM code block. Formats and types of OAM code blocks are defined in a Metro Transport Network (MTN) standard released by the International Telecommunication Union (ITU). An OAM code block is a specially defined 66-bit O-code block, and an O-sequence value of the OAM code block is 0xC; that is, a feature value of the OAM code block consists of synchronization header bits of "10", a control word of 0x4B, and the O-sequence value of 0xC. Various types of OAM code blocks are provided, which may be classified into three major categories: Base code blocks, APS code blocks, and L code blocks. A Base code block is a basic function code block having a single-code-block structure, and the Base code block may be divided into two sub-categories: Base1 and Base2, which are referred to as B1 and B2 code blocks, respectively. An APS code block is a protection code block having a multi-code-block structure consisting of two code blocks. An L code block is a low-priority code block, where the low-priority code blocks are further divided into a plurality of sub-categories including, CV, CS, 1DM, and 2DM. A low-priority code block of some of the sub-categories has a single-code-block structure, whereas a low-priority code block of some of the sub-categories has a multi-code-block structure consisting of a plurality of code blocks. OAM code blocks may be transmitted at equal intervals based on a period *T* and in a fixed sequence pattern. As illustrated in FIG. 17, a sequence relationship among B1, A, B2, and L may constitute a small sequence cycle, and every 64 small sequence cycles may constitute one large sequence cycle. At a position of an L code block in each small sequence cycle within a large sequence cycle, the position of the L code block in the 1st to 17th small sequence cycles may carry a CV code block, the position of the L code block in the 18th small sequence cycle may carry a CS code block, the position of the L code block in the 19th to 31st small sequence cycles may carry a 1DM or 2DM code block, and the position of the L code block in the 32nd to 64th small sequence cycles may be configured as a reserved position. The currently defined reserved position is vacant, and the L code block is not transmitted at the currently defined reserved position. Referring to FIG. 18, in an application, B1, A, B2, and L code blocks may be OAM code blocks defined by an existing standard. A functional expansion may be performed on the OAM code blocks such that an additional function of carrying indication information including C1, C2, and C3, is achieved. As illustrated in FIG. 18, a B1 code block also carries C1 indication information, an A code block also carries C2 indication information, a B2 code block also carries C3 indication information, and a B1 code block in a subsequent small sequence cycle is configured as a timeslot switchover reference moment position carrying CCC indication information. In this manner, indication information for non-disruptive bandwidth adjustment and a switchover moment indication function may be implemented via existing OAM code blocks.

It can be understood that under a standard definition, an APS code block may be transmitted only when a client enables an APS protection. If an APS protocol and an APS are not enabled in a client application, a corresponding position is vacant and the APS code block is not transmitted.

In an embodiment, an L code block is also not transmitted at a position of the L code block in the 32nd to 64th B1-A-B2-L small sequence cycles. In this scenario, a specially defined code block, which is referred to as a pseudo-APS code block (or referred to as a pseudo-A code block, or a C2 code block), is additionally transmitted at a position of an APS code block. The pattern of the OAM sequence transmitted in this manner is illustrated in FIG. 19, where three code blocks, i.e., a B1 code block, a pseudo-A code block, and a B2 code block, may transmit C1, C2, and C3 indication signals to indicate timeslot adjustment, and a position of a B1 code block in an immediately following small sequence cycle is configured as an agreed timeslot adjustment reference moment position. When transmission of an APS code block is not enabled, a code block referred to as a pseudo-APS code block, or a specially defined C2 indication code block, is additionally transmitted, and the additionally transmitted code block is transmitted along with a B1 code block and a B2 code block. In a practical application, in addition to transmitting the C1, C2, and C3 indication signals via one set of three code blocks, namely, the B1 code block, the A code block, and the B2 code block, the C1, C2, and C3 indication signals may also be transmitted via another set of three code blocks, namely, the B1 code block, the B2 code block, and the L code block. A functional extension may be performed on the OAM code blocks such that an additional function of carrying indication information including C1, C2, and C3, is achieved. As illustrated in FIG. 20, when the L code block is absent, a pseudo-L code block (also referred to as a C3 code block) may be transmitted to carry C3 adjustment flag information.

Notably, an OAM code block defined by an ITU standard is a 66-bit code block, representing an extension of an *o* code block in the Ethernet standard. An *o* code block having an *o* sequence value of 0xC is defined as the OAM code block, and a specific format thereof is illustrated in Table 1.

**Table 1 Format of an OAM code block with a newly defined o sequence value**

| **0** | **1** | **2-9** | **10** | **11** | **12-17** | **18-25** | **26-33** | **34-37** | **25-65** |
|---|---|---|---|---|---|---|---|---|---|
| 1 | 0 | 0x4B | So M | Eo M | type | value 1 | value2 | 0xC | 0x000000000000 |

As illustrated therein, synchronization header bits of the OAM code block are "10", a block control word value is 0x4B, and an *o* sequence value is 0xC. A combination of a SoM bit and an EoM bit can be configured to indicate a composition sequence relationship of a plurality of code blocks, and to distinguish a start block, an intermediate block, and an end block among the plurality of code blocks. A specific definition is shown in Table 2:

**Table 2 Definition of a combination relationship of a SoM bit and an EoM bit**

| SoM | EoM | |
|---|---|---|
| 1 | 0 | Indicating a first block in a present OAM type sequence among multiple code blocks |
| 0 | 0 | Indicating an intermediate block in the present OAM type sequence among multiple code blocks |
| 0 | 1 | Indicating an end block in the present OAM type sequence among multiple code blocks |
| 1 | 1 | Indicating a single code block structure |

The type field in the OAM code block is indicative of an OAM code block type, including, for example, a Base code block (referred to as a B code block), an APS code block (referred to as an A code block), and an L code block (representing a low-priority code block including, without limitation, a CV code block, a CS code block, and 1DM). A *value1* field and a *value2* field may be configured to carry specific information of the OAM code block. A Base code block is divided into two subcategories, namely, B1 and B2 (which represent a Base1 code block and a Base2 code block, respectively). The contents of the two types of B code blocks are identical. The Base code block is divided into the two subcategories of B1 and B2 solely to determine different positions in a sequential relationship among the B1 code block (representing the Base1 code block), the A code block (representing the APS code block), the B2 code block (representing the Base2 code block), and the L code block (representing the L code block). The B1 code block is immediately preceding a position of the A code block, and the B2 code block is immediately succeeding the position of the A code block. The specific structure of a B code block is shown in Table 3:

**Table 3 Specific structure of a B code block**

| **Type** | **So M** | **Eo M** | **bit18** | **bit19** | **bit20** | **bit21** | **bit22** | **bit23** | **bit24** | **bit25** | **26-33** |
|---|---|---|---|---|---|---|---|---|---|---|---|
| **B1** | **1** | **0** | res | res | res | rdi | rei | rei | rei | rei | parity |
| **B2** | **0** | **1** | res | res | res | rdi | rei | rei | rei | rei | parity |

In particular, a bit 18, a bit 19, and a bit 20 in the B code block are represented by *res,* indicating that these bit positions are not yet enabled and represent reserved information. Any one of these bit positions may be enabled to carry timeslot adjustment indication C information. As illustrated in Table 5, bit 21 may be enabled to carry timeslot adjustment indication C information. Timeslot adjustment indication C1 and C3 information, or timeslot adjustment indication C1 and C2 information, may be represented via the B1 code block and the B2 code block, and a definition of the B code block is illustrated in Table 4.

**Table 4 Definition of a B code block with timeslot adjustment indication C information**

| Type | So M | Eo M | bit18 | bit19 | bit20 | bit21 | bit22 | bit23 | bit24 | bit25 | bit26-33 |
|---|---|---|---|---|---|---|---|---|---|---|---|
| **B1** | **1** | **0** | res | res | **C** | rdi | rei | rei | rei | rei | parity |
| **B2** | **0** | **1** | res | res | **C** | rdi | rei | rei | rei | rei | parity |

In addition, an APS code block consists of two sequential code blocks, namely, an A1 code block and an A2 code block, where each code block of the two sequential code blocks is configured to carry a 2-byte payload, and a 4-byte payload of the two sequential code blocks collectively constitutes the content of an APS protocol. The APS format is illustrated in Table 5.

**Table 5 APS format table**

| **SoM** | **EoM** | **bit18** | **bit19** | **bit20** | **bit21** | **bit22** | **bit23** | **bit24** | **bit25** | **bit26-33** |
|---|---|---|---|---|---|---|---|---|---|---|
| **1** | **0** | APS1 byte | | | | | | | | APS2 byte |
| **0** | **1** | res | res | res | res | CRC12 | | | | |

Specifically, four bits in a second code block in an APS code block sequence group are reserved and not enabled, and any one bit thereof may be enabled to carry timeslot adjustment indication C2 information. As illustrated in Table 6, bit 21 may be enabled to carry timeslot adjustment indication C2 information. The structure of the APS code block with extended function is illustrated in Table 6.

**Table 6 Structure of an APS code block with extended new function**

| **SoM** | **EoM** | **bit18** | **bit19** | **bit20** | **bit21** | **bit22** | **bit23** | **bit24** | **bit25** | **bit26-33** |
|---|---|---|---|---|---|---|---|---|---|---|
| **1** | **0** | APS1 byte | | | | | | | | APS2 byte |
| **0** | **1** | res | res | res | **C** | CRC12 | | | | |

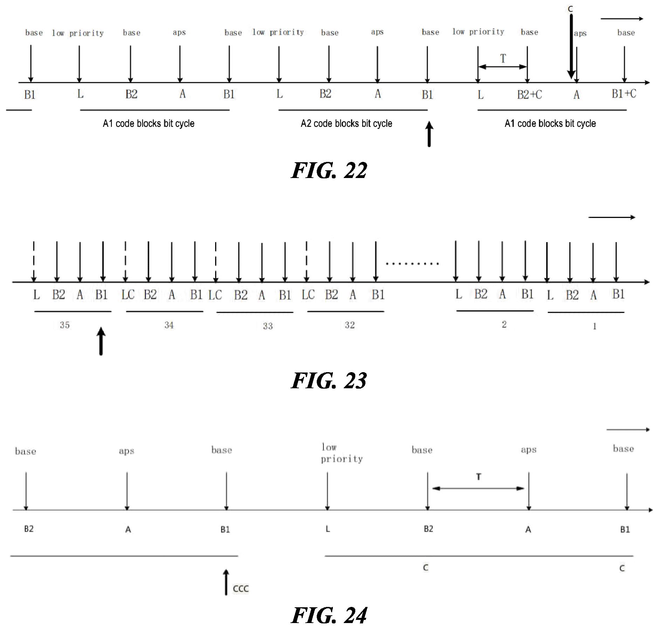

As illustrated in FIG. 21, only a second APS code block (representing an A2 code block) has an extended reserved field to carry timeslot adjustment indication. Consequently, in a practical application, only the second APS code block (A2), an immediately preceding B1 code block, and an immediately succeeding B2 code block of the second APS code block (A2) may be selected and combined to transmit three bits of information carrying timeslot adjustment indications C1, C2, and C3. That is, a minor cycle of B1- A2-B2-L is selected to transmit the timeslot adjustment indications. In contrast, in a minor cycle of B1-A1-B2-L, timeslot adjustment indication cannot be transmitted because the A1 code block lacks an extended bit. Notably, if a timeslot adjustment indication is to be transmitted during a minor cycle of B1-A1-B2-L due to timing constraints, as illustrated in FIG. 22, a specially defined code block, such as a C2 code block (also referred to as a pseudo-A code block), may be inserted immediately succeeding (or immediately preceding) the A code block, and is specifically configured to additionally transmit one timeslot adjustment indication. *SoM* and *EoM* values in a normal A code block are " 10" or "01". A pseudo code block may adopt a format identical to that of the A code block with the difference that the *SoM* and *EoM* values thereof are "11" to distinguish the pseudo code block from an A code block transmitting an APS protocol, as illustrated in Table 7.

**Table 7 Format of a pseudo code block**

| **SoM** | **EoM** | **bit18** | **bit19** | **bit20** | **bit21** | **bit22** | **bit23** | **bit24** | **bit25** | **bit26-33** |
|---|---|---|---|---|---|---|---|---|---|---|
| **1** | **1** | Any value, e.g., res, res, res, res, res, ........ | | | | | | | | |

When detecting that a format of a code block corresponds to a type value of an A code block while *SoM* and *EoM* values thereof are "11", the code block may be determined to be a pseudo-A code block, and the pseudo-A code block may be utilized to transmit timeslot adjustment indication C2 information. In addition to the type value of the A code block to indicate the format of a pseudo-A code block as described above, a function of the pseudo-A code block or the C2 code block may also be indicated based on other distinct type values. Similarly, when timeslot adjustment indication C1, C2, and C3 information is not carried and transmitted by a B code block with extended function, a code block carrying timeslot adjustment indications C1, C2, and C3 may also be transmitted by separately inserting a pseudo-B code block. Notably, such alternative implementations all fall within the scope of the present application.

It should be noted that, similar to an APS code block, each of a CV code block, a CS code block, a 1DM code block, a 2DM code block in an L code block also has a reserved bit, any one reserved bit thereof may be enabled to carry timeslot adjustment indication.

In an embodiment where no L code block is configured, a pseudo-L code block (also referred to as a C3 code block) may be separately transmitted to carry timeslot adjustment indication. When an L code block in a current minor cycle of B1-A-B2-L lacks a reserved bit that can be extended to carry a timeslot adjustment indication, a specially defined code block, such as a C3 code block, may also be inserted immediately preceding or immediately succeeding the L code block, and is specifically configured to additionally transmit one timeslot adjustment indication.

In an embodiment, OAM code blocks may be transmitted at equal intervals based on a period *T* and in a fixed sequence pattern, in which the B1 code block, the A code block, the B2 code block, and the L code block form a minor cycle, and each set of 64 minor cycles constitutes a major cycle. At an L code block location of each minor cycle, the L code block of the first to seventeenth minor cycles corresponds to a CV code block, that of the eighteenth minor cycle corresponds to a CS code block, that of the nineteenth to thirty-first minor cycles corresponds to 1DM/2DM code blocks, and that of the thirty-second to sixty-fourth minor cycles are reserved, which are vacant and no L code block is transmitted therein. However, a specially defined pseudo-L code block (also referred to as an LC code block) may be transmitted at the L code block during any of the thirty-second to sixty-fourth minor cycles to transmit a timeslot adjustment indication. As illustrated in FIG. 23, L code block locations in the thirty-second, thirty-third, and thirty-fourth minor cycles may be selected to transmit a specially defined pseudo-L code block (also referred to as an LC code block) to carry a timeslot adjustment indication. A B1 code block of an immediately succeeding minor cycle (representing the thirty-fifth minor cycle) is configured as a reference baseline moment for the timeslot adjustment. In a practical application, L code block locations in the thirty-third, thirty-fourth, and thirty-fifth minor cycles may also be selected to transmit one specially defined pseudo-L code block. Notably, such alternative configurations all fall within the scope of the present application.

In the aforementioned embodiments, information carrying a timeslot adjustment indication is transmitted a plurality of times, and a majority-vote decision result is considered as a final adjustment decision. The majority-vote decision scheme can accommodate a certain number of transmission errors, thereby preventing an incorrect decision from being caused by a limited number of transmission errors. For example, a majority-vote decision scheme based on three-time transmission can tolerate any single transmission error of the three-time transmission, whereas a majority-vote decision scheme based on five-time transmission can tolerate up to two transmission errors of the five-time transmission. The majority-vote decision scheme requires multiple transmissions of information. In a practical application, another method for improving error tolerance is available, in which a verification bit is added to the transmitted information in each transmission to determine whether each transmission of the information is correct. In a B code block, three reserved bits are present, and any two bits thereof may be utilized to transmit adjustment indication information, in which a combination of the two utilized bits determines whether the adjustment indication information is correct. As illustrated in Table 8, a C bit represents the adjustment indication information, a bip bit serves as a verification bit for the C bit, and even parity check or odd parity check may be employed. When the even parity check is adopted, when the value of C bit is 1, the value of *BIP* bit should be also 1; when the value of C bit is 0, the value of *BIP* bit should be also 0. A fixed relationship exists between a value of the C bit and a value of the BIP bit, such that a combination of the C bit and the BIP bit can only be "11" or "00". In a case of a single-bit error, the combination of value of the C bit and the value of the BIP bit "10" or "01" are identified as errors, thereby enabling determination that an error may have occurred in the C bit. By means of the timeslot adjustment indication with verification function, three or five transmissions of the information is not required, with only two transmissions is possible. In a case where a bit error causes only one transmission error, even if one error is induced, the other value remains correct and available. As illustrated in FIG. 24, timeslot adjustment indication with verification is carried by B1 and B2 code blocks. When a value of a verification bit BIP and a value of a C bit in any one B code block are combined, and a corresponding value of the C bit is determined to be correct, the determined value of the C bit is considered as final timeslot adjustment indication. As illustrated in FIG. 24, timeslot adjustment indication with verification function is carried only by B1 and B2 code blocks, and an immediately succeeding B code block is configured as a reference baseline moment for timeslot adjustment.

**Table 8 Format of a B code block**

| **Type** | **SoM** | **EoM** | **bit18** | **bit19** | **bit20** | **bit21** | **bit22** | **bit23** | **bit24** | **bit25** | **bit26-33** |
|---|---|---|---|---|---|---|---|---|---|---|---|
| **B1** | **1** | **0** | res | **C** | **bip** | rdi | rei | rei | rei | rei | parity |
| **B2** | **0** | **1** | res | **C** | **bip** | rdi | rei | rei | rei | rei | parity |

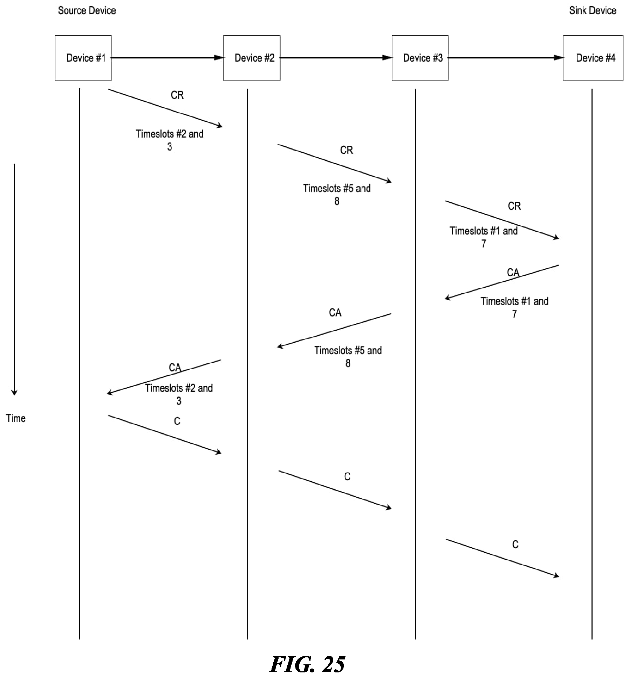

In the aforementioned embodiments, when performing an end-to-end timeslot adjustment, a source-point device initiates transmission of a timeslot adjustment request, the adjusted timeslot serial numbers among a source device, an intermediate network device, and a sink device may be exactly identical. Accordingly, the intermediate network device only needs to forward a timeslot adjustment request signal, timeslot serial numbers, and a timeslot adjustment acknowledgment signal, thereby implementing a handshake negotiation process for the end-to-end timeslot adjustment. In a practical application, since configured timeslots of each node device may differ, remaining timeslot serial numbers among the node devices may be inconsistent. Accordingly, only the consistency of adjusted timeslot quantities between two adjacent node devices needs to be ensured, whereas timeslot locations and timeslot identifiers do not need to be exactly identical. As illustrated in FIG. 25, timeslot #2 and idle timeslot #3 may be selected for timeslot adjustment between source device 1 and downstream device 2 . Similarly, timeslot #5 and timeslot #8 may be selected for timeslot adjustment between downstream device 2 and device 3, and timeslot #1 and timeslot #7 may be selected for timeslot adjustment between device 3 and device 4. Accordingly, a request signal CR, an acknowledgment signal CA, and corresponding timeslot serial numbers for adjustment between adjacent devices are correlated with each other, and are corresponding to the adjusted timeslots with one-to-one correspondence. When a source node transmits an adjustment indication signal C, the adjustment indication signal C may also be transmitted to each node device in a corresponding valid adjusted timeslot.

In an embodiment, under normal circumstances, once a source device transmits valid CR information, the received valid CR information may be parsed by an intermediate device and forwarded to a downstream device, and may be ultimately forwarded to a sink device. Under special or abnormal circumstances, an intermediate device or sink device may determine that a timeslot adjustment requirement cannot be satisfied based on a requested timeslot quantity, and may accordingly reject the timeslot adjustment request. As illustrated in FIG. 26, when a source device requests to increase ten timeslots, sufficient idle timeslots are present between device 1 and device 2 to satisfy the timeslot adjustment request, sufficient idle timeslots are present between device 2 and device 3 to satisfy the timeslot adjustment request, and the timeslot adjustment request may be further forwarded downstream. However, when insufficient idle timeslots are present between device 3 and device 4 to satisfy the timeslot increase, and device 3 does not forward the timeslot adjustment request information to device 4, accordingly, the timeslot adjustment request is rejected. In this case, device 3 may directly return an adjustment failure acknowledgment signal *CA_fail* to an upstream device, and the requested timeslots by device 2 remain unallocated. Upon receiving the returned adjustment failure acknowledgment signal *CA_fail,* device 2 revokes the requested timeslots and further returns the adjustment failure acknowledgment signal *CA_fail* to upstream device 1. Upon receiving the returned adjustment failure acknowledgment signal *CA_fail,* device 1 determines the failure of the timeslot adjustment request, withdraws the requested timeslot adjustment request, and cancels the requested timeslot adjustment operation. As such, the revocation of the timeslot adjustment request is completed.

In the embodiments as discussed above, a client number of a corresponding timeslot may be changed from an invalid number to a valid number, thereby indicating an addition of the corresponding timeslot. Alternatively, the client number of the corresponding timeslot may be changed from a valid number to an invalid number, thereby indicating a deletion or reduction of the corresponding timeslot. In a practical application, in addition to utilizing a alternation of the client number to indicate a request for addition or deletion of a timeslot, other indications may also be employed. For example, an overhead indication bit may be configured to indicate an addition indication signal or a deletion indication signal for each timeslot. The addition indication signal or the deletion indication signal may be directly indicative of a request for timeslot addition or timeslot deletion. Notably, different indications all fall within the scope of the present application.

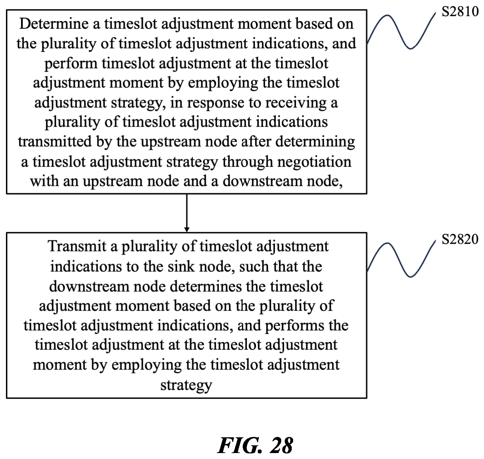

FIG. 28 is a flowchart illustrating a method for timeslot adjustment according to an embodiment of the present application. The method is applicable to an intermediate node. The method may include, without limitation, operations S2810 to S2820.

At operation S2810, in response to receiving a plurality of timeslot adjustment indications transmitted by the upstream node after determining a timeslot adjustment strategy through negotiation with an upstream node and a downstream node, a timeslot adjustment moment is determined based on the plurality of timeslot adjustment indications, and timeslot adjustment is performed at the timeslot adjustment moment by employing the timeslot adjustment strategy.

At operation S2820, a plurality of timeslot adjustment indications are transmitted to the sink node, such that the downstream node determines the timeslot adjustment moment based on the plurality of timeslot adjustment indications, and accomplish the timeslot adjustment at the timeslot adjustment moment by employing the timeslot adjustment strategy.

In a feasible implementation, when a client service is in a transmission state and timeslot adjustment information is to be inserted into a service flow, upon an intermediate node determining a timeslot adjustment strategy in coordination with an upstream node and a downstream node, timeslot adjustment indication transmitted by the upstream node may be received by the intermediate node, and the timeslot adjustment indication may be transmitted to the downstream node, thereby enabling each node device to perform timeslot adjustment at a determined timeslot adjustment moment during a client stream transmission in accordance with the timeslot adjustment strategy. Accordingly, the asynchronous duration between a client service bandwidth variation moment and a timeslot quantity variation moment is reduced, such that a buffered service quantity can be reduced, and the equipment cost and client latency are lowered down.

In an implementation, upon an intermediate node determining a timeslot adjustment strategy through negotiation with an upstream node and a downstream node, timeslot switchover moment indication transmitted by the upstream node may also be received by the intermediate node. The timeslot switchover moment indication is indicative of a timeslot adjustment moment, and is subsequently transmitted to the downstream node.

In a feasible embodiment, timeslot switchover moment indication may also be carried in a timeslot switchover moment code block in the client stream. The timeslot adjustment moment may include one of the following conditions: the timeslot adjustment moment is a subsequent timeslot of a timeslot that contains the timeslot switchover moment code block; the timeslot adjustment moment is a starting position or a first timeslot of a subsequent bearer frame of a bearer frame that contains the timeslot switchover moment code block; the timeslot adjustment moment is a starting position of a first bearer frame in a subsequent multi-frame of a multi-frame that contains the timeslot switchover moment code block, or a first timeslot of the first bearer frame in the next multi-frame.

In a feasible embodiment, the timeslot adjustment indication may be configured to indicate that the timeslot adjustment strategy comes into force. In addition, the plurality of timeslot adjustment indications may be carried in a plurality of timeslot adjustment indication code blocks in the client stream.

In a feasible embodiment, timeslot switchover moment indication may be carried in a timeslot switchover moment code block in the client stream, an equal or unequal quantity of first code blocks may be present between two adjacent timeslot adjustment indication code blocks, and between the timeslot switchover moment code block and a last transmitted timeslot adjustment indication code block.

In a feasible embodiment, when timeslot switchover moment indication is carried in a timeslot switchover moment code block in the client stream, a first quantity of first code blocks may be present between two adjacent timeslot adjustment indication code blocks, and a second quantity of first code blocks may be present between the timeslot switchover moment code block and a last transmitted timeslot adjustment indication code block. It should be noted that the second quantity is not equal to the first quantity.

In a feasible embodiment, the timeslot switchover moment code block may be determined based on the first quantity and a position of any one timeslot adjustment indication code block.

In a feasible embodiment, the timeslot switchover moment code block corresponds to an expected position in the client stream, and the expected position may be determined based on the first quantity and a position of any one timeslot adjustment indication code block. When a code block corresponding to the expected position is a code block within a data packet, the timeslot switchover moment code block is a first code block immediately following an end code block in the data packet.

In a feasible embodiment, the timeslot adjustment indication code block and the timeslot switchover moment code block may have an identical code block type, and a timeslot adjustment function field is included in both the timeslot adjustment indication code block and the timeslot switchover moment code block. A timeslot adjustment function field in a timeslot adjustment indication code block is configured to carry a timeslot adjustment indication, and a timeslot adjustment function field in a timeslot switchover moment code block is configured to carry a timeslot switchover moment indication.

In a feasible embodiment, a synchronization header bit, a control word, and a type sequence value are further included in both the timeslot adjustment indication code block and the timeslot switchover moment code block. A combination of the synchronization header bit, the control word, and the type sequence value is employed as a flag value indicative of the timeslot adjustment indication code block or the timeslot switchover moment code block.

According to this embodiment, by adopting the method for timeslot adjustment including operation S2810 to operation S2820 discussed above, after the intermediate node determines the timeslot adjustment strategy through negotiation with the upstream node and the downstream node, when the intermediate node receives the plurality of timeslot adjustment indications transmitted by the upstream node, the timeslot adjustment moment can be determined according to the plurality of timeslot adjustment indications, and the timeslot adjustment is accomplished at the timeslot adjustment moment by employing the timeslot adjustment strategy. By transmitting a plurality of timeslot adjustment indications to the downstream node, the downstream node can determine the timeslot adjustment moment according to the plurality of timeslot adjustment indications, and accomplish the timeslot adjustment at the timeslot adjustment moment by employing a corresponding timeslot adjustment strategy. Therefore, an asynchronous duration between the client stream bandwidth variation moment and the timeslot quantity variation moment may be reduced, such that a buffered client stream quantity may be reduced, and a network overhead cost and client service latency are lowered down.

In an embodiment, the plurality of timeslot adjustment indications may be carried in a plurality of timeslot adjustment indication code blocks in the client stream, and the timeslot adjustment moment is determined based on a position of any one of the timeslot adjustment indication code blocks.

In an embodiment, a third quantity of first code blocks may be present between two adjacent timeslot adjustment indication code blocks. The timeslot adjustment moment may be determined based on a timeslot adjustment reference moment, and the timeslot adjustment reference moment may be determined based on the third quantity and a position of any one of the timeslot adjustment indication code blocks.

In an embodiment, the timeslot adjustment moment may include one of:
the timeslot adjustment moment is a subsequent timeslot immediately following a timeslot that contains the timeslot adjustment reference moment;
the timeslot adjustment moment is a starting position or a first timeslot of a subsequent bearer frame immediately following a bearer frame associated with the timeslot adjustment reference moment;
the timeslot adjustment moment is a starting position of a first bearer frame in a subsequent multi-frame immediately following a multi-frame associated with the timeslot adjustment reference moment, or a first timeslot of the first bearer frame in the subsequent multi-frame.

In an embodiment, a fourth quantity of first code blocks may be present between a position associated with the timeslot adjustment reference moment and a last transmitted timeslot adjustment indication code block. It should be noted that the fourth quantity is less than or equal to the third quantity.

In an embodiment, a timeslot adjustment function field may be further included in the timeslot adjustment indication code block, where the timeslot adjustment function field is configured to carry the timeslot adjustment indication.

In an embodiment, the plurality of timeslot adjustment indications may be carried in an OAM code block in the client stream.

In an embodiment, when an APS code block is included in the OAM code block, the plurality of timeslot adjustment indications may be respectively carried in a Base1 code block, the APS code block, and a Base2 code block in the OAM code block. The timeslot adjustment moment may be determined based on a position of a first Base1 code block immediately following the Base2 code block that carries the timeslot adjustment indication.

Alternatively,
when no APS code block is included in the OAM code block, a pseudo APS code block is configured between a Base1 code block and a Base2 code block in the OAM code block. The plurality of timeslot adjustment indications may be respectively carried in the Base1 code block, the pseudo-APS code block, and the Base2 code block. The timeslot adjustment moment is determined based on a position of a first Base1 code block immediately following the Base2 code block that carries the timeslot adjustment indication.

Alternatively,
when an APS code block is comprised in the OAM code block, a pseudo-APS code block is configured before or after the APS code block. The plurality of timeslot adjustment indications can be respectively carried in a Base1 code block, the pseudo-APS code block, and a Base2 code block in the OAM code block. The timeslot adjustment moment can be determined according to a position where a first Base1 code block following the Base2 code block carrying the timeslot adjustment indication is located.

In an embodiment, when an APS code block is comprised in the OAM code block, a first APS sub-block and a second APS sub-block may be included in the APS code block. In this case, the timeslot adjustment indication may be carried in the second APS sub-block.

In a feasible embodiment, when an L code block is included in an OAM code block, the plurality of timeslot adjustment indications may be respectively carried in a Base1 code block, a Base2 code block, and the L code block in the OAM code block. The timeslot adjustment moment may be determined based on a position of a first Base1 code block immediately following the L code block that carries the timeslot adjustment indication.

Alternatively, when an L code block is not included in the OAM code block, a pseudo-L code block may be configured at a position corresponding to the L code block in the OAM code block. The plurality of timeslot adjustment indications may be respectively carried in a Base1 code block, a Base2 code block, and the pseudo-L code block in the OAM code block. The timeslot adjustment moment may be determined based on a position of a first Base1 code block immediately following the pseudo-L code block that carries the timeslot adjustment indication.

Alternatively, when an L code block is included in the OAM code block, a pseudo-L code block may be configured at a position immediately preceding or immediately following the L code block. The plurality of timeslot adjustment indications may be respectively carried in a Base1 code block, a Base2 code block, and the pseudo-L code block in the OAM code block. The timeslot adjustment moment may be determined based on a position of a first Base1 code block immediately following the pseudo-L code block that carries the timeslot adjustment indication.

In an embodiment, a verification bit may be included in the timeslot adjustment indication code block, where the verification bit may be configured to verify correctness of the timeslot adjustment indication.

In an embodiment, after an intermediate node receives the plurality of timeslot adjustment indications transmitted by the upstream node, validity of each timeslot adjustment indication can be determined first. When a quantity of valid timeslot adjustment indications is greater than a quantity of invalid timeslot adjustment indications, the timeslot adjustment strategy is determined to come into force.

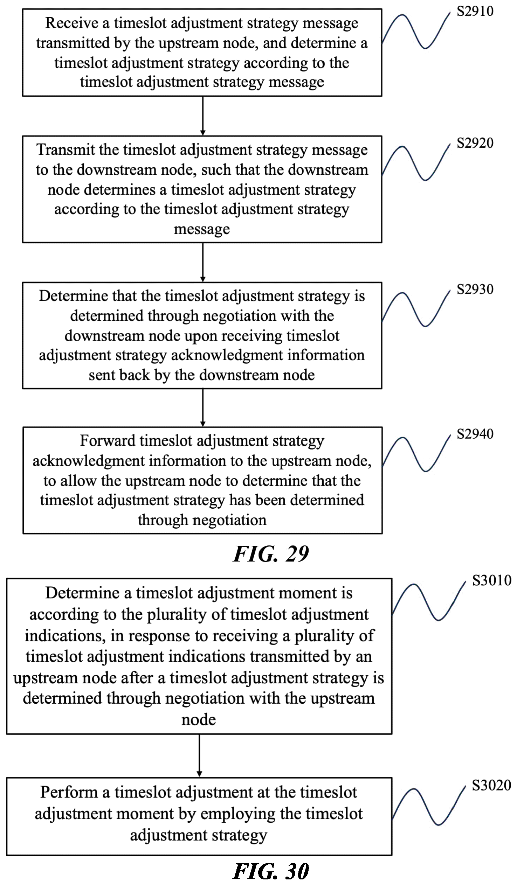

FIG. 29 is a flowchart illustrating a method for determining a timeslot adjustment strategy through negotiation by an intermediate node according to an embodiment of the present application. When a timeslot adjustment strategy is determined through negotiation with an upstream node and a downstream node by an intermediate node, as illustrated in FIG. 29, a procedure of determining the timeslot adjustment strategy may include, without limitation, operations S2910 to S2940.

At operation S2910, a timeslot adjustment strategy message transmitted by the upstream node is received, and a timeslot adjustment strategy is determined according to the timeslot adjustment strategy message.

At operation S2920, the timeslot adjustment strategy message is transmitted to the downstream node, such that the downstream node determines a timeslot adjustment strategy according to the timeslot adjustment strategy message.

At operation S2930, upon receiving timeslot adjustment strategy acknowledgment information sent back by the downstream node, a determination is made that the timeslot adjustment strategy is determined through negotiation with the downstream node.

At operation S2940, timeslot adjustment strategy acknowledgment information is forwarded to the upstream node, to allow the upstream node to determine that the timeslot adjustment strategy has been determined through negotiation.

In an embodiment, the timeslot adjustment strategy information further includes timeslot adjustment application information and information about adjustment. The timeslot adjustment application information is intended to request timeslot adjustment. The information about adjustment is intended to determine the timeslot adjustment strategy.

Notably, in the method for timeslot adjustment performed by the intermediate node set forth in an embodiment of the present application, reference may be made to the corresponding descriptions in the foregoing embodiments for structures of the OAM code blocks involved and the timeslot adjustment process completed through interaction among the intermediate node, the upstream node, and the downstream node, and details thereof are not repeated herein to avoid redundancy.

FIG. 30 is a flowchart illustrating a method for timeslot adjustment according to an embodiment of the present application. The method is applicable to a sink node. The method may include, without limitation, operations S3010 to S3020.

At operation S3010, in response to receiving a plurality of timeslot adjustment indications transmitted by an upstream node after a timeslot adjustment strategy is determined through negotiation with the upstream node, a timeslot adjustment moment is determined according to the plurality of timeslot adjustment indications.

At operation S3020, a timeslot adjustment is performed at the timeslot adjustment moment by employing the timeslot adjustment strategy.

In a feasible implementation, when a client service is in a transmission state and timeslot adjustment information is to be inserted into a client stream, upon a sink node determining a timeslot adjustment strategy in coordination with an upstream node, timeslot adjustment indication transmitted by the upstream node may be received by the sink node, thereby enabling each node device to perform timeslot adjustment at a determined timeslot adjustment moment during transmission of the client service in accordance with the timeslot adjustment strategy. Accordingly, the asynchronous duration between a client service bandwidth variation moment and a timeslot quantity variation moment is reduced, such that a buffered service quantity can be reduced, and the equipment cost and client latency are lowered down.

In an implementation, upon the sink node determining a timeslot adjustment strategy through negotiation with an upstream node, timeslot switchover moment indication transmitted by the upstream node may further be received by the sink node. The timeslot switchover moment indication is indicative of a timeslot adjustment moment.

In a feasible implementation, the timeslot switchover moment indication is carried in a timeslot switchover moment code block in a client stream, and the timeslot adjustment moment includes one of:
the timeslot adjustment moment is a timeslot immediately succeeding a timeslot that contains the timeslot switchover moment code block;
the timeslot adjustment moment is a starting position or a first timeslot of a bearer frame immediately succeeding a bearer frame that contains the timeslot switchover moment code block; or
the timeslot adjustment moment is a starting position or a first timeslot of a first bearer frame in a multi-frame immediately succeeding the multi-frame that contains the timeslot switchover moment code block.

In a feasible embodiment, the timeslot adjustment indication message may be further configured to indicate that the timeslot adjustment strategy comes into force. In addition, the plurality of timeslot adjustment indications may be carried in a plurality of timeslot adjustment indication code blocks in the client stream.

In a feasible embodiment, timeslot switchover moment indication may be carried in a timeslot switchover moment code block in the client stream, an equal or unequal quantity of first code blocks may be present between two adjacent timeslot adjustment indication code blocks, and between the timeslot switchover moment code block and a last transmitted timeslot adjustment indication code block.

In a feasible embodiment, when timeslot switchover moment indication is carried in a timeslot switchover moment code block in the client stream, a first quantity of first code blocks may be present between two adjacent timeslot adjustment indication code blocks, and a second quantity of first code blocks may be present between the timeslot switchover moment code block and a last transmitted timeslot adjustment indication code block. It should be noted that the second quantity is not equal to the first quantity.

In a feasible embodiment, the timeslot switchover moment code block may be determined based on the first quantity and a position of any one timeslot adjustment indication code block.

In a feasible embodiment, the timeslot switchover moment code block corresponds to an expected position in the client stream, and the expected position may be determined based on the first quantity and a position of any one timeslot adjustment indication code block. When a code block corresponding to the expected position is a code block within a data packet, the timeslot switchover moment code block is a first code block immediately following an end code block in the data packet.

In a feasible embodiment, the timeslot adjustment indication code block and the timeslot switchover moment code block may have an identical code block type, and a timeslot adjustment function field is included in both the timeslot adjustment indication code block and the timeslot switchover moment code block. A timeslot adjustment function field in a timeslot adjustment indication code block is configured to carry a timeslot adjustment indication, and a timeslot adjustment function field in a timeslot switchover moment code block is configured to carry a timeslot switchover moment indication.

In a feasible embodiment, a synchronization header bit, a control word, and a type sequence value are further included in both the timeslot adjustment indication code block and the timeslot switchover moment code block. A combination of the synchronization header bit, the control word, and the type sequence value is employed as a flag value indicative of the timeslot adjustment indication code block or the timeslot switchover moment code block.

According to this embodiment, by adopting the method for timeslot adjustment including operation S3010 to operation S3020 discussed above, after the sink node determines the timeslot adjustment strategy through negotiation with the upstream node, when the sink node receives the plurality of timeslot adjustment indications transmitted by the upstream node, the timeslot adjustment moment can be determined according to the plurality of timeslot adjustment indications, and the timeslot adjustment is accomplished at the timeslot adjustment moment by employing a corresponding timeslot adjustment strategy. Therefore, an asynchronous duration between the client stream bandwidth variation moment and the timeslot quantity variation moment may be reduced, such that a buffered client stream quantity may be reduced, and a network overhead cost and client service latency are lowered down.

In an embodiment, the plurality of timeslot adjustment indications may be carried in a plurality of timeslot adjustment indication code blocks in the client stream, and the timeslot adjustment moment is determined based on a position of any one of the timeslot adjustment indication code blocks.

In an embodiment, a third quantity of first code blocks may be present between two adjacent timeslot adjustment indication code blocks. The timeslot adjustment moment may be determined based on a timeslot adjustment reference moment, and the timeslot adjustment reference moment may be determined based on the third quantity and a position of any one of the timeslot adjustment indication code blocks.

In an embodiment, the timeslot adjustment moment may include one of:
the timeslot adjustment moment is a subsequent timeslot immediately following a timeslot that contains the timeslot adjustment reference moment;
the timeslot adjustment moment is a starting position or a first timeslot of a subsequent bearer frame immediately following a bearer frame associated with the timeslot adjustment reference moment;
the timeslot adjustment moment is a starting position of a first bearer frame in a subsequent multi-frame immediately following a multi-frame associated with the timeslot adjustment reference moment, or a first timeslot of the first bearer frame in the subsequent multi-frame.

In an embodiment, a fourth quantity of first code blocks may be present between a position associated with the timeslot adjustment reference moment and a last transmitted timeslot adjustment indication code block. It should be noted that the fourth quantity is less than or equal to the third quantity.

In an embodiment, a timeslot adjustment function field may be further included in the timeslot adjustment indication code block, where the timeslot adjustment function field is configured to carry the timeslot adjustment indication.

In an embodiment, the plurality of timeslot adjustment indications may further be carried in an OAM code block in the client stream.

In an embodiment, when an APS code block is included in the OAM code block, the plurality of timeslot adjustment indications may be respectively carried in a Base1 code block, the APS code block, and a Base2 code block in the OAM code block. The timeslot adjustment moment may be determined based on a position of a first Base1 code block immediately following the Base2 code block that carries the timeslot adjustment indication.

Alternatively, when no APS code block is included in the OAM code block, a pseudo-APS code block is configured between a Base1 code block and a Base2 code block in the OAM code block. The plurality of timeslot adjustment indications may be respectively carried in the Base1 code block, the pseudo-APS code block, and the Base2 code block. The timeslot adjustment moment is determined based on a position of a first Base1 code block immediately following the Base2 code block that carries the timeslot adjustment indication.

Alternatively, when an APS code block is included in the OAM code block, a pseudo-Automatic Protection Switching (APS) code block may be configured at a position immediately preceding or immediately following the APS code block. The plurality of timeslot adjustment indications may be respectively carried in a Base1 code block, the pseudo-APS code block, and a Base2 code block in the OAM code block. The timeslot adjustment moment may be determined based on a position of a first Base1 code block immediately following the Base2 code block that carries the timeslot adjustment indication.

In an embodiment, when an APS code block is comprised in the OAM code block, a first APS sub-block and a second APS sub-block may be included in the APS code block. In this case, the timeslot adjustment indication may be carried in the second APS sub-block.

In an embodiment, when an L code block is included in an OAM code block, the plurality of timeslot adjustment indications may be respectively carried in a Base1 code block, a Base2 code block, and the L code block in the OAM code block. The timeslot adjustment moment may be determined based on a position of a first Base1 code block immediately following the L code block that carries the timeslot adjustment indication.

Alternatively, when an L code block is not included in the OAM code block, a pseudo-L code block may be configured at a position corresponding to the L code block in the OAM code block. The plurality of timeslot adjustment indications may be respectively carried in a Base1 code block, a Base2 code block, and the pseudo-L code block in the OAM code block. The timeslot adjustment moment may be determined based on a position of a first Base1 code block immediately following the pseudo-L code block that carries the timeslot adjustment indication.

Alternatively, when an L code block is included in the OAM code block, a pseudo-L code block may be configured at a position immediately preceding or immediately following the L code block. The plurality of timeslot adjustment indications may be respectively carried in a Base1 code block, a Base2 code block, and the pseudo-L code block in the OAM code block. The timeslot adjustment moment may be determined based on a position of a first Base1 code block immediately following the pseudo-L code block that carries the timeslot adjustment indication.

In an embodiment, a verification bit may be included in the timeslot adjustment indication code block, where the verification bit may be configured to verify correctness of the timeslot adjustment indication.

In an embodiment, when the sink node receives the plurality of timeslot adjustment indications transmitted by the upstream node, the sink node may first determine the validity of each timeslot adjustment indication message. When a quantity of valid timeslot adjustment indications is greater than a quantity of invalid timeslot adjustment indications, the timeslot adjustment strategy is determined to be effective.

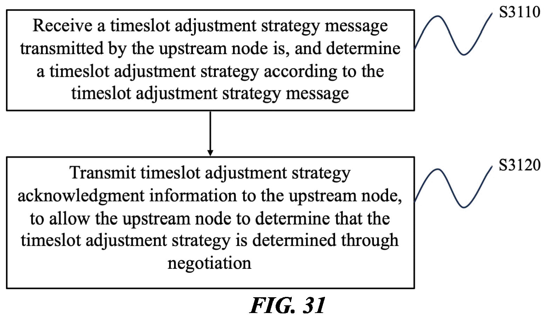

FIG. 31 is a flowchart illustrating a method for determining a timeslot adjustment strategy through negotiation by a sink node according to an embodiment of the present application. When a timeslot adjustment strategy is determined through negotiation with an upstream node by the sink node, as illustrated in FIG. 31, a procedure of determining the timeslot adjustment strategy may include, without limitation, operations S3110 to S3120.

At operation S3110, a timeslot adjustment strategy message transmitted by the upstream node is received, and a timeslot adjustment strategy is determined according to the timeslot adjustment strategy message.

At operation S3120, timeslot adjustment strategy acknowledgment information is transmitted to the upstream node, to allow the upstream node to determine that the timeslot adjustment strategy is determined through negotiation.

In a feasible embodiment, the timeslot adjustment strategy information further includes timeslot adjustment application information and information about adjustment. The timeslot adjustment application information is intended to request timeslot adjustment. The information about adjustment is intended to determine the strategy of the timeslot adjustment strategy.

Notably, in the method for timeslot adjustment performed by the sink node set forth in an embodiment of the present application, reference may be made to the corresponding descriptions in the foregoing embodiments for structures of the OAM code blocks involved and the timeslot adjustment process completed through interaction between the upstream node, and the sink node, and details thereof are not repeated herein to avoid redundancy.

According to an embodiment of the present application, a communication apparatus is provided. The apparatus includes a memory, a processor, and a computer program stored in the memory and executable on the processor which, when executed by the processor, causes the processor to carry out the method as described in any one of the embodiments above.

According to an embodiment of the present application, a computer-readable storage medium is provided. The computer-readable storage medium stores a computer-executable instruction which, when executed by a processor, causes the processor to carry out the method as described in any one of the embodiments above.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. Those having ordinary skills in the art can various equivalent modifications or substitutions without departing the scope of the present disclosure, and these equivalent modifications or substitutions are within the scope defined by the claims of the present disclosure.

## Claims

1. A method for timeslot adjustment, comprising:
in response to a negotiation with a downstream node and a sink node to determine a timeslot adjustment strategy, performing a timeslot adjustment at a timeslot adjustment moment by employing the timeslot adjustment strategy; and
transmitting a plurality of timeslot adjustment indications to the sink node through the downstream node, to allow the downstream node and the sink node to determine the timeslot adjustment moment based on the plurality of timeslot adjustment indications, and to perform the timeslot adjustment at the timeslot adjustment moment by employing the timeslot adjustment strategy.

2. The method according to claim 1, further comprising,
transmitting a timeslot switchover moment indication to the sink node through the downstream node, wherein the timeslot switchover moment indication is indicative of the timeslot adjustment moment.

3. The method according to claim 2, wherein the timeslot switchover moment indication is carried in a timeslot switchover moment code block in a client stream, and the timeslot adjustment moment comprises one of:
the timeslot adjustment moment is a timeslot immediately succeeding a timeslot that contains the timeslot switchover moment code block;
the timeslot adjustment moment is a starting position or a first timeslot of a bearer frame immediately succeeding a bearer frame that contains the timeslot switchover moment code block; or
the timeslot adjustment moment is a starting position or a first timeslot of a first bearer frame in a multi-frame immediately succeeding the multi-frame that contains the timeslot switchover moment code block.

4. The method according to claim 2, wherein the timeslot adjustment indication message is configured to indicate that the timeslot adjustment strategy comes into force; and the plurality of timeslot adjustment indications are carried in a plurality of timeslot adjustment indication code blocks in a client stream.

5. The method according to claim 4, wherein
the timeslot switchover moment indication is carried in the timeslot switchover moment code block in the client stream, an equal or unequal quantity of first code blocks are present between two adjacent timeslot adjustment indication code blocks, and between the timeslot switchover moment code block and a last transmitted one of the plurality of timeslot adjustment indication code blocks;
or,
the timeslot switchover moment indication is carried in the timeslot switchover moment code block in the client stream, a first quantity of first code blocks are present between two adjacent ones of the timeslot adjustment indication code blocks, and a second quantity of first code blocks are present between the timeslot switchover moment code block and the last transmitted one of the plurality of timeslot adjustment indication code blocks, and the second quantity is not equal to the first quantity.

6. The method according to claim 5, wherein in response to determining that a first quantity of first code blocks are present between two adjacent ones of the timeslot adjustment indication code blocks, the timeslot switchover moment code block is determined based on the first quantity and a position of any one of the timeslot adjustment indication code blocks.

7. The method according to claim 6, wherein the timeslot switchover moment code block corresponds to an expected position in the client stream, and the expected position is determined based on the first quantity and a position of any one of the timeslot adjustment indication code blocks; and in response to determining that a code block corresponding to the expected position is within a data packet, the timeslot switchover moment code block is a first code block immediately following an end code block in the data packet.

8. The method according to any one of claims 5 to 7, wherein the timeslot adjustment indication code blocks and the timeslot switchover moment code block have an identical code block type, and a timeslot adjustment function field is included in both the timeslot adjustment indication code blocks and the timeslot switchover moment code block; the timeslot adjustment function field in each of the timeslot adjustment indication code blocks is configured to carry a respective one of the timeslot adjustment indications, the timeslot adjustment function field in the timeslot switchover moment code block is configured to carry the timeslot switchover moment indication; and
each of the timeslot adjustment indication code blocks and the timeslot switchover moment code block further comprises a synchronization header bit, a control word, and a type sequence value, and a combination of the synchronization header bit, the control word, and the type sequence value is employed as a flag value indicative of the respective timeslot adjustment indication code block or the timeslot switchover moment code block.

9. The method according to claim 1, wherein the plurality of timeslot adjustment indications are carried in a plurality of timeslot adjustment indication code blocks in a client stream, and the timeslot adjustment moment is determined based on a position of any one of the timeslot adjustment indication code blocks.

10. The method according to claim 9, wherein a third quantity of first code blocks are present between two adjacent ones of the timeslot adjustment indication code blocks; the timeslot adjustment moment is determined based on a timeslot adjustment reference moment, and the timeslot adjustment reference moment is determined based on the third quantity and a position of any one of the timeslot adjustment indication code blocks.

11. The method according to claim 10, wherein the timeslot adjustment moment comprises one of:
the timeslot adjustment moment is a subsequent timeslot immediately following a timeslot that contains the timeslot adjustment reference moment;
the timeslot adjustment moment is a starting position or a first timeslot of a subsequent bearer frame immediately following a bearer frame that carries the timeslot adjustment reference moment;
the timeslot adjustment moment is a starting position or a first timeslot of a first bearer frame in a subsequent multi-frame immediately following a multi-frame that carries the timeslot adjustment reference moment.

12. The method according to claim 10, wherein a fourth quantity of first code blocks are present between a position associated with the timeslot adjustment reference moment and a last transmitted one of the timeslot adjustment indication code blocks, and the fourth quantity is less than or equal to the third quantity.

13. The method according to any one of claims 9 to 12, wherein each of the timeslot adjustment indication code blocks comprises a synchronization header bit, a control word, a type sequence value, and a timeslot adjustment function field; the timeslot adjustment function field is configured to carry a respective one of the timeslot adjustment indications, and a combination of the synchronization header bit, the control word, and the type sequence value is employed as a flag value indicative of the respective one of the timeslot adjustment indication code blocks.

14. The method according to claim 1, wherein the plurality of timeslot adjustment indications are carried in an Operations, Administration, and Maintenance (OAM) code block in the client stream.

15. The method according to claim 14, wherein
in response to determining that an Automatic Protection Switching (APS) code block is included in the OAM code block, each of the plurality of timeslot adjustment indications is respectively carried in a Base1 code block, the APS code block, and a Base2 code block in the OAM code block; and the timeslot adjustment moment is determined based on a position of a first Base1 code block immediately following the Base2 code block that carries a respective one of the timeslot adjustment indications;
or,
in response to determining that APS code block is absent from the OAM code block, a pseudo-APS code block is provided between a Base1 code block and a Base2 code block in the OAM code block; each of the plurality of timeslot adjustment indications is respectively carried in the Base1 code block, the pseudo-APS code block, and the Base2 code block; and the timeslot adjustment moment is determined based on a position of a first Base1 code block immediately following the Base2 code block that carries one of the timeslot adjustment indications;
or,
in response to determining that an APS code block is included in the OAM code block, a pseudo-APS code block is provided immediately preceding or immediately succeeding the APS code block; each of the plurality of timeslot adjustment indications is carried in a Base1 code block, the pseudo-APS code block, and a Base2 code block in the OAM code block; and the timeslot adjustment moment is determined based on a position of a first Base1 code block succeeding the Base2 code block that carries a respective one of the timeslot adjustment indications;
or,
in response to determining that an L code block is included in the OAM code block, each of the plurality of timeslot adjustment indications is respectively carried in a Base1 code block, a Base2 code block, and the L code block in the OAM code block; the timeslot adjustment moment is determined based on a position of a first Base1 code block immediately following the L code block that carries a respective one of the timeslot adjustment indications;
or,
in response to determining that an L code block is absent from the OAM code block, a pseudo-L code block is provided at a position corresponding to the L code block in the OAM code block; each of the plurality of timeslot adjustment indications is respectively carried in a Base1 code block, a Base2 code block, and the pseudo-L code block in the OAM code block; the timeslot adjustment moment is determined based on a position of a first Base1 code block immediately following the pseudo-L code block that carries a respective one of the timeslot adjustment indications;
or,
in response to determining that an L code block is included in the OAM code block, a pseudo-L code block is provided at a position immediately preceding or immediately following the L code block; each of the plurality of timeslot adjustment indications is respectively carried in a Base1 code block, a Base2 code block, and the pseudo-L code block in the OAM code block; and the timeslot adjustment moment is determined based on a position of a first Base1 code block immediately following the pseudo-L code block that carries a respective one of the timeslot adjustment indications.

16. The method according to claim 15, wherein in response to determining that an APS code block is included in the OAM code block, a first APS sub-block and a second APS sub-block are included in the APS code block; and a respective one of the timeslot adjustment indications is carried in the second APS sub-block.

17. The method according to claim 4 or 9, wherein a verification bit is included in each of the timeslot adjustment indication code blocks, wherein the verification bit is utilized to verify correctness of a respective one of the timeslot adjustment indications.

18. A method for timeslot adjustment, comprising:
in response to receiving a plurality of timeslot adjustment indications transmitted by an upstream node after determining a timeslot adjustment strategy through negotiation with the upstream node and a downstream node, determining a timeslot adjustment moment based on the plurality of timeslot adjustment indications, and performing timeslot adjustment at the timeslot adjustment moment by employing the timeslot adjustment strategy; and
transmitting the plurality of timeslot adjustment indications to the downstream node, to allow the downstream node to determine the timeslot adjustment moment based on the plurality of timeslot adjustment indications, and to perform the timeslot adjustment at the timeslot adjustment moment by employing the timeslot adjustment strategy.

19. The method according to claim 18, further comprising,
receiving timeslot switchover moment indication transmitted by the upstream node, wherein the timeslot switchover moment indication is indicative of the timeslot adjustment moment; and
transmitting the timeslot switchover moment indication to the downstream node.

20. The method according to claim 19, wherein the timeslot switchover moment indication is carried in a timeslot switchover moment code block in a client stream, and the timeslot adjustment moment comprises one of:
the timeslot adjustment moment is a timeslot immediately succeeding a timeslot that contains the timeslot switchover moment code block;
the timeslot adjustment moment is a starting position or a first timeslot of a bearer frame immediately succeeding a bearer frame that contains the timeslot switchover moment code block; or
the timeslot adjustment moment is a starting position or a first timeslot of a first bearer frame in a multi-frame immediately succeeding the multi-frame that contains the timeslot switchover moment code block.

21. The method according to claim 19, wherein the timeslot adjustment indication message is configured to indicate that the timeslot adjustment strategy comes into force; and the plurality of timeslot adjustment indications are carried in a plurality of timeslot adjustment indication code blocks in a client stream.

22. The method according to claim 21, wherein
the timeslot switchover moment indication is carried in the timeslot switchover moment code block in the client stream, an equal or unequal quantity of first code blocks are present between two adjacent timeslot adjustment indication code blocks, and between the timeslot switchover moment code block and a last transmitted one of the plurality of timeslot adjustment indication code blocks;
or,
the timeslot switchover moment indication is carried in the timeslot switchover moment code block in the client stream, a first quantity of first code blocks are present between two adjacent ones of the timeslot adjustment indication code blocks, and a second quantity of first code blocks are present between the timeslot switchover moment code block and the last transmitted one of the plurality of timeslot adjustment indication code blocks, and the second quantity is not equal to the first quantity.

23. The method according to claim 22, wherein in response to determining that a first quantity of first code blocks are present between two adjacent ones of the timeslot adjustment indication code blocks, the timeslot switchover moment code block is determined based on the first quantity and a position of any one of the timeslot adjustment indication code blocks.

24. The method according to claim 23, wherein the timeslot switchover moment code block corresponds to an expected position in the client stream, and the expected position is determined based on the first quantity and a position of any one of the timeslot adjustment indication code blocks; and in response to determining that a code block corresponding to the expected position is within a data packet, the timeslot switchover moment code block is a first code block immediately following an end code block in the data packet.

25. The method according to any one of claims 22 to 24, wherein, the timeslot adjustment indication code block and the timeslot switchover moment code block have an identical code block type, and a timeslot adjustment function field is included in both the timeslot adjustment indication code block and the timeslot switchover moment code block; the timeslot adjustment function field in a timeslot adjustment indication code block is configured to carry a respective one of timeslot adjustment indications, and the timeslot adjustment function field in the timeslot switchover moment code block is configured to carry a timeslot switchover moment indication.
each of the timeslot adjustment indication code blocks and the timeslot switchover moment code block further comprises a synchronization header bit, a control word, and a type sequence value, and a combination of the synchronization header bit, the control word, and the type sequence value is employed as a flag value indicative of the respective timeslot adjustment indication code block or the timeslot switchover moment code block.

26. The method according to claim 18, wherein the plurality of timeslot adjustment indications are carried in a plurality of timeslot adjustment indication code blocks in a client stream, and the timeslot adjustment moment is determined based on a position of any one of the timeslot adjustment indication code blocks.

27. The method according to claim 26, wherein a third quantity of first code blocks are present between two adjacent ones of the timeslot adjustment indication code blocks; the timeslot adjustment moment is determined based on a timeslot adjustment reference moment, and the timeslot adjustment reference moment is determined based on the third quantity and a position of any one of the timeslot adjustment indication code blocks.

28. The method according to claim 27, wherein the timeslot adjustment moment comprises one of:
the timeslot adjustment moment is a subsequent timeslot immediately following a timeslot that contains the timeslot adjustment reference moment;
the timeslot adjustment moment is a starting position or a first timeslot of a subsequent bearer frame immediately following a bearer frame that carries the timeslot adjustment reference moment;
the timeslot adjustment moment is a starting position, or a first timeslot of a first bearer frame in a subsequent multi-frame immediately following a multi-frame that carries the timeslot adjustment reference moment.

29. The method according to claim 27, wherein a fourth quantity of first code blocks are present between a position associated with the timeslot adjustment reference moment and a last transmitted one of the timeslot adjustment indication code blocks, and the fourth quantity is less than or equal to the third quantity.

30. The method according to any one of claims 26 to 29, wherein each of the timeslot adjustment indication code blocks comprises a synchronization header bit, a control word, a type sequence value, and a timeslot adjustment function field; the timeslot adjustment function field is configured to carry a respective one of the timeslot adjustment indications, and a combination of the synchronization header bit, the control word, and the type sequence value is employed as a flag value indicative of the respective one of the timeslot adjustment indication code blocks.

31. The method according to claim 18, wherein the plurality of timeslot adjustment indications are carried in an Operations, Administration, and Maintenance (OAM) code block in the client stream.

32. The method according to claim 31, wherein
in response to determining that an Automatic Protection Switching (APS) code block is included in the OAM code block, each of the plurality of timeslot adjustment indications is respectively carried in a Base1 code block, the APS code block, and a Base2 code block in the OAM code block; and the timeslot adjustment moment is determined based on a position of a first Base1 code block immediately following the Base2 code block that carries a respective one of the timeslot adjustment indications;
or,
in response to determining that APS code block is absent from the OAM code block, a pseudo APS code block is provided between a Base1 code block and a Base2 code block in the OAM code block; each of the plurality of timeslot adjustment indications is respectively carried in the Base1 code block, the pseudo APS code block, and the Base2 code block; and the timeslot adjustment moment is determined based on a position of a first Base1 code block immediately following the Base2 code block that carries one of the timeslot adjustment indications;
or,
in response to determining that an APS code block is included in the OAM code block, a pseudo APS code block is provided immediately preceding or immediately succeeding the APS code block; each of the plurality of timeslot adjustment indications is carried in a Base1 code block, the pseudo APS code block, and a Base2 code block in the OAM code block; and the timeslot adjustment moment is determined based on a position of a first Base1 code block succeeding the Base2 code block that carries a respective one of the timeslot adjustment indications;
or,
in response to determining that an L code block is included in the OAM code block, each of the plurality of timeslot adjustment indications is respectively carried in a Base1 code block, a Base2 code block, and the L code block in the OAM code block; the timeslot adjustment moment is determined based on a position of a first Base1 code block immediately following the L code block that carries a respective one of the timeslot adjustment indications;
or,
in response to determining that an L code block is absent from the OAM code block, a pseudo-L code block is provided at a position corresponding to the L code block in the OAM code block; each of the plurality of timeslot adjustment indications is respectively carried in a Base1 code block, a Base2 code block, and the pseudo-L code block in the OAM code block; the timeslot adjustment moment is determined based on a position of a first Base1 code block immediately following the pseudo-L code block that carries a respective one of the timeslot adjustment indications;
or,
in response to determining that an L code block is included in the OAM code block, a pseudo-L code block is provided at a position immediately preceding or immediately following the L code block; each of the plurality of timeslot adjustment indications is respectively carried in a Base1 code block, a Base2 code block, and the pseudo-L code block in the OAM code block; and the timeslot adjustment moment is determined based on a position of a first Base1 code block immediately following the pseudo-L code block that carries a respective one of the timeslot adjustment indications.

33. The method according to claim 32, wherein in response to determining that an APS code block is comprised in the OAM code block, a first APS sub-block and a second APS sub-block are included in the APS code block; and a respective one of the timeslot adjustment indications is carried in the second APS sub-block.

34. The method according to claim 21 or 26, wherein a verification bit is included in each of the timeslot adjustment indication code blocks, wherein the verification bit is utilized to verify correctness of a respective one of the timeslot adjustment indications.

35. The method according to claim 18, further comprising,
determining validity of each of the timeslot adjustment indications;
in response to determining that a quantity of valid timeslot adjustment indications is greater than a quantity of invalid timeslot adjustment indications among the timeslot adjustment indications, determining that the timeslot adjustment strategy comes into force.

36. A method for timeslot adjustment, comprising:
in response to receiving a plurality of timeslot adjustment indications transmitted by an upstream node after determining a timeslot adjustment strategy through negotiation with the upstream node, determining a timeslot adjustment moment based on to the plurality of timeslot adjustment indications;
performing a timeslot adjustment at the timeslot adjustment moment by employing the timeslot adjustment strategy.

37. The method according to claim 36, further comprising,
receiving timeslot switchover moment indication transmitted by the upstream node, wherein the timeslot switchover moment indication is indicative of the timeslot adjustment moment.

38. The method according to claim 37, wherein the timeslot switchover moment indication is carried in a timeslot switchover moment code block in a client stream, and the timeslot adjustment moment comprises one of:
the timeslot adjustment moment is a timeslot immediately succeeding a timeslot that contains the timeslot switchover moment code block;
the timeslot adjustment moment is a starting position or a first timeslot of a bearer frame immediately succeeding a bearer frame that contains the timeslot switchover moment code block; or
the timeslot adjustment moment is a starting position or a first timeslot of a first bearer frame in a multi-frame immediately succeeding the multi-frame that contains the timeslot switchover moment code block.

39. The method according to claim 37, wherein the timeslot adjustment indication message is configured to indicate that the timeslot adjustment strategy comes into force; and the plurality of timeslot adjustment indications are carried in a plurality of timeslot adjustment indication code blocks in a client stream.

40. The method according to claim 39, wherein
the timeslot switchover moment indication is carried in the timeslot switchover moment code block in the client stream, an equal or unequal quantity of first code blocks are present between two adjacent timeslot adjustment indication code blocks, and between the timeslot switchover moment code block and a last transmitted one of the plurality of timeslot adjustment indication code blocks;
or,
the timeslot switchover moment indication is carried in the timeslot switchover moment code block in the client stream, a first quantity of first code blocks are present between two adjacent ones of the timeslot adjustment indication code blocks, and a second quantity of first code blocks are present between the timeslot switchover moment code block and the last transmitted one of the plurality of timeslot adjustment indication code blocks, and the second quantity is not equal to the first quantity.

41. The method according to claim 40, wherein in response to determining that a first quantity of first code blocks are present between two adjacent ones of the timeslot adjustment indication code blocks, the timeslot switchover moment code block is determined based on the first quantity and a position of any one of the timeslot adjustment indication code blocks.

42. The method according to claim 41, wherein the timeslot switchover moment code block corresponds to an expected position in the client stream, and the expected position is determined based on the first quantity and a position of any one of the timeslot adjustment indication code blocks; and in response to determining that a code block corresponding to the expected position is within a data packet, the timeslot switchover moment code block is a first code block immediately following an end code block in the data packet.

43. The method according to any one of claims 40 to 42, wherein the timeslot adjustment indication code blocks and the timeslot switchover moment code block have an identical code block type, and a timeslot adjustment function field is included in both the timeslot adjustment indication code blocks and the timeslot switchover moment code block; the timeslot adjustment function field in the timeslot adjustment indication code blocks is configured to carry a respective one of the timeslot adjustment indications, and the timeslot adjustment function field in the timeslot switchover moment code block is configured to carry the timeslot switchover moment indication; and
each of the timeslot adjustment indication code blocks and the timeslot switchover moment code block further comprises a synchronization header bit, a control word, and a type sequence value, and a combination of the synchronization header bit, the control word, and the type sequence value is employed as a flag value indicative of the respective timeslot adjustment indication code block or the timeslot switchover moment code block.

44. The method according to claim 36, wherein the plurality of timeslot adjustment indications are carried in a plurality of timeslot adjustment indication code blocks in a client stream, and the timeslot adjustment moment is determined based on a position of any one of the timeslot adjustment indication code blocks.

45. The method according to claim 44, wherein a third quantity of first code blocks are present between two adjacent ones of the timeslot adjustment indication code blocks; the timeslot adjustment moment is determined based on a timeslot adjustment reference moment, and the timeslot adjustment reference moment is determined based on the third quantity and a position of any one of the timeslot adjustment indication code blocks.

46. The method according to claim 45, wherein the timeslot adjustment moment comprises one of:
the timeslot adjustment moment is a subsequent timeslot immediately following a timeslot that contains the timeslot adjustment reference moment;
the timeslot adjustment moment is a starting position or a first timeslot of a subsequent bearer frame immediately following a bearer frame that carries the timeslot adjustment reference moment;
the timeslot adjustment moment is a starting position, or a first timeslot of a first bearer frame in a subsequent multi-frame immediately following a multi-frame that carries the timeslot adjustment reference moment.

47. The method according to claim 45, wherein a fourth quantity of first code blocks are present between a position associated with the timeslot adjustment reference moment and a last transmitted one of the timeslot adjustment indication code blocks, and the fourth quantity is less than or equal to the third quantity.

48. The method according to any one of claims 44 to 47, wherein each of the timeslot adjustment indication code blocks comprises a synchronization header bit, a control word, a type sequence value, and a timeslot adjustment function field; the timeslot adjustment function field is configured to carry a respective one of the timeslot adjustment indications, and a combination of the synchronization header bit, the control word, and the type sequence value is employed as a flag value indicative of the respective one of the timeslot adjustment indication code blocks.

49. The method according to claim 36, wherein the plurality of timeslot adjustment indications are carried in an Operations, Administration, and Maintenance (OAM) code block in the client stream.

50. The method according to claim 49, wherein
in response to determining that an Automatic Protection Switching (APS) code block is included in the OAM code block, each of the plurality of timeslot adjustment indications is respectively carried in a Base1 code block, the APS code block, and a Base2 code block in the OAM code block; and the timeslot adjustment moment is determined based on a position of a first Base1 code block immediately following the Base2 code block that carries a respective one of the timeslot adjustment indications;
or,
in response to determining that APS code block is absent from the OAM code block, a pseudo APS code block is provided between a Base1 code block and a Base2 code block in the OAM code block; each of the plurality of timeslot adjustment indications is respectively carried in the Base1 code block, the pseudo-APS code block, and the Base2 code block; and the timeslot adjustment moment is determined based on a position of a first Base1 code block immediately following the Base2 code block that carries one of the timeslot adjustment indications;
or,
in response to determining that an APS code block is included in the OAM code block, a pseudo-APS code block is provided immediately preceding or immediately succeeding the APS code block; each of the plurality of timeslot adjustment indications is carried in a Base1 code block, the pseudo-APS code block, and a Base2 code block in the OAM code block; and the timeslot adjustment moment is determined based on a position of a first Base1 code block succeeding the Base2 code block that carries a respective one of the timeslot adjustment indications;
or,
in response to determining that an L code block is included in the OAM code block, each of the plurality of timeslot adjustment indications is respectively carried in a Base1 code block, a Base2 code block, and the L code block in the OAM code block; the timeslot adjustment moment is determined based on a position of a first Base1 code block immediately following the L code block that carries a respective one of the timeslot adjustment indications;
or,
in response to determining that an L code block is absent from the OAM code block, a pseudo-L code block is provided at a position corresponding to the L code block in the OAM code block; each of the plurality of timeslot adjustment indications is respectively carried in a Base1 code block, a Base2 code block, and the pseudo-L code block in the OAM code block; the timeslot adjustment moment is determined based on a position of a first Base1 code block immediately following the pseudo-L code block that carries a respective one of the timeslot adjustment indications;
or,
in response to determining that an L code block is included in the OAM code block, a pseudo-L code block is provided at a position immediately preceding or immediately following the L code block; each of the plurality of timeslot adjustment indications is respectively carried in a Base1 code block, a Base2 code block, and the pseudo-L code block in the OAM code block; and the timeslot adjustment moment is determined based on a position of a first Base1 code block immediately following the pseudo-L code block that carries a respective one of the timeslot adjustment indications.

51. The method according to claim 50, wherein in response to determining that an APS code block is included in the OAM code block, a first APS sub-block and a second APS sub-block are included in the APS code block; and a respective one of the timeslot adjustment indications is carried in the second APS sub-block.

52. The method according to claim 39 or 44, wherein a verification bit is included in each of the timeslot adjustment indication code blocks, wherein the verification bit is utilized to verify correctness of a respective one of the timeslot adjustment indications.

53. The method according to claim 36, further comprising,
determining validity of each of the timeslot adjustment indications; and
in response to determining that a quantity of valid timeslot adjustment indications is greater than a quantity of invalid timeslot adjustment indications among the timeslot adjustment indications, determining that the timeslot adjustment strategy comes into force.
